# EUROPEAN PATENT SPECIFICATION

(11) **EP 2 832 702 B1**
(45) Date of publication and mention of the grant of the patent: **25.04.2018**
(21) Application number: 13769959.1
(22) Date of filing: 27.03.2013
(51) Int. Cl.: C02F 1/461, F24H 1/18, F24H 4/04, F24D 19/00, F24D 17/02, C02F 103/02

(54) **ELECTROLYSIS DEVICE AND TEMPERATURE-ADJUSTING WATER-SUPPLYING MACHINE PROVIDED WITH SAME**
ELEKTROLYSEVORRICHTUNG UND TEMPERATURREGELNDE WASSERZUFÜHRMASCHINE DAMIT
DISPOSITIF D'ÉLECTROLYSE ET MACHINE DE DISTRIBUTION D'EAU À AJUSTEMENT DE TEMPÉRATURE LE COMPRENANT

(30) Priority: 28.03.2012 JP 2012073618; 30.03.2012 JP 2012079547; 03.12.2012 JP 2012264147
(43) Date of publication of application: 04.02.2015
(73) Proprietor: Daikin Industries, Ltd., Osaka 530-8323 (JP)
(72) Inventor: YOSHIDA, Kaori, Osaka-shi, Osaka 530-8323 (JP); SHIBATA, Yutaka, Osaka-shi, Osaka 530-8323 (JP); AGATA, You, Osaka-shi, Osaka 530-8323 (JP); FUJINAMI, Isao, Osaka-shi, Osaka 530-8323 (JP)
(74) Representative: Goddar, Heinz J.
(86) International application number: PCT/JP2013/002103
(87) International publication number: WO 2013/145743

(56) References cited:
- WO-A1-2006/030162
- WO-A2-00/73215
- JP-A- H11 207 346
- JP-A- 2000 140 849
- JP-A- 2001 121 153
- JP-A- 2005 152 864
- JP-A- 2005 211 892
- JP-A- 2008 264 718
- JP-A- 2009 045 524
- JP-A- 2012 075 982
- JP-U- H0 652 998
- JP-U- S60 186 097

## Description

### Technical Field

The present invention relates to a heat pump hot-water supply apparatus which is provided with an electrolysis device for removing a scale component.

### Background Art

Tap water and groundwater comprise components (scale components) such as calcium ions, magnesium ions and the like, that give rise to formation of scale. Therefore, scale in the form of calcium salts (for instance, calcium carbonate), magnesium salts or the like may precipitate in temperature-adjusting water-supplying apparatus such as a water heater. Water that is heated in a water heat exchanger of a temperature-adjusting water-supplying apparatus is at a high temperature, and hence scale is particularly prone to precipitate therein. When scale precipitates and becomes deposited on the inner faces of pipes in the water heat exchanger, problems occur in that, for instance, the performance of the water heat exchanger is impaired, and flow channels in pipes become narrower.

Patent Literature 1 discloses a combustion-type hot-water supply apparatus provided with means for preventing generation of scale. Patent Literature 2 proposes a technology wherein a scale component in water is removed by electrolysis in an electrolysis device that is provided upstream of a water heat exchanger of a heat pump hot-water supply apparatus, with a view to suppressing deposition of scale in the water heat exchanger. When water is supplied into a container of this electrolysis device via a water inlet port, in a state where voltage is applied to the water by an electrode pair, scale such as calcium carbonate precipitates on the cathode side of the electrode pair. As a result there is lowered the concentration of scale component in the water that flows out of the container via a water outlet port.

The efficiency of electrolysis in the electrolysis device i.e. the efficiency with which the scale component is removed in the electrolysis device must be increased in order to enhance the effect of suppressing precipitation of scale in the water heat exchanger. Fig. 12 of Patent Literature 2 discloses a technology wherein water that has passed through an electrolysis device is returned to upstream of the electrolysis device, and is caused to flow again into the electrolysis
device. The effect of enhancing the removal efficiency of scale component may in some instances be insufficient, however, when simply resorting to this disclosed technology.

Means for increasing the removal efficiency of scale component in electrolysis devices include, for instance, increasing the surface area of the electrodes that come into contact with water. However, the electrodes are formed of expensive materials such as platinum, titanium or the like having excellent corrosion resistance, and hence higher costs are incurred when the surface area of the electrodes is increased in order to increase the removal efficiency of scale component.

Patent Literature 1: Japanese Patent Application Publication No. 2001-317817
Patent Literature 2: Japanese Patent Application Publication No. 2012-075982

JP2008264718 A discloses an electrolysis device comprising a container with a water inlet port and a water outlet port, a plurality of electrodes provided inside the container, and agitation means for agitating water flowing between adjacent electrodes, between the water inlet port and the water outlet port.WO2006/030162 A1 discloses an electrolysis apparatus suitable for being used in combination with a heat exchanger and to remove scale components from water, comprising a container with a water inlet and a water outlet, a plurality of electrodes and an agitation means.

WO00173215 A2 discloses an electrolysis device comprising a plurality of electrodes arranged inside a housing with an inlet and an outlet, as well as an agitating means including electrode plates forming a meandering flow channel through which the water flows.

### Summary of Invention

It is an object of the present invention to provide a heat-pump hot water supply apparatus comprising an electrolysis device that allows increasing the removal efficiency of scale component while curtailing increases in cost derived from electrode materials.

The apparatus of the present invention according to claim 1 is for removing a scale component contained in water that is fed to a water heat exchanger and comprises a container having a water inlet port and a water outlet port, a plurality of electrodes provided inside the container, and agitation means for agitating water that flows between adjacent electrodes, between the water inlet port and the water outlet port, as well as further features specified in claim 1.

### Brief Description of Drawings

Fig. 1 is a configuration diagram illustrating a heat pump hot-water supply apparatus.
Fig. 2 is a perspective view illustrating an electrolysis device.
Figs. 3A and 3B illustrate an electrolysis device according to a first embodiment (not part of the invention), wherein Fig. 3A is a cross-sectional diagram of the electrolysis device cut along a plane parallel to a vertical direction, and
Fig. 3B is a cross-sectional diagram of the electrolysis device cut along a plane parallel to a horizontal direction.
Fig. 4A is a cross-sectional diagram of an enlarged portion of Fig. 3A, and Fig. 4B is a cross-sectional diagram of an enlarged portion of Fig. 3B.
Fig. 5 is a cross-sectional diagram illustrating Variation 1 of the electrolysis device of the first embodiment.
Figs. 6A and 6B are cross-sectional diagrams illustrating Variation 2 of the electrolysis device of the first embodiment, wherein Fig. 6A is a cross-sectional diagram of the electrolysis device of Variation 2 cut along a plane parallel to the vertical direction, and Fig. 6B is a cross-sectional diagram of the electrolysis device of Variation 2 cut along a plane parallel to the horizontal direction.
Fig. 7 is a cross-sectional diagram illustrating Variation 3 of the electrolysis device of the first embodiment.
Fig. 8 is a cross-sectional diagram illustrating Variation 4 of the electrolysis device of the first embodiment.
Fig. 9 is a cross-sectional diagram illustrating Variation 5 of the electrolysis device of the first embodiment.
Fig. 10 is a cross-sectional diagram illustrating Variation 6 of the electrolysis device of the first embodiment.
Fig. 11A is a cross-sectional diagram of an electrolysis device of a second embodiment (not part of the invention) cut along a plane parallel to a vertical direction, and Fig. 11B is a cross-sectional diagram of the electrolysis device of the second embodiment cut along a plane parallel to a horizontal direction.
Fig. 12A is a front-view diagram illustrating an electrode plate of the electrolysis device of the second embodiment, Fig. 12B illustrates an electrode plate in Variation 1 of the electrolysis device of the second embodiment, and Fig. 12C illustrates an electrode plate in Variation 2 of the electrolysis device of the second embodiment.
Fig. 13 is a perspective view diagram illustrating the arrangement of a plurality of electrode plates, and the flow of water, in the electrolysis device of the second embodiment.
Fig. 14 is a cross-sectional diagram illustrating the flow of water inside a container in the electrolysis device of the second embodiment.
Fig. 15 is a perspective view diagram illustrating the arrangement of a plurality of electrode plates, and the flow of water, in Variation 3 of the electrolysis device of the second embodiment.
Fig. 16A is a front-view diagram illustrating an electrode plate in Variation 4 of the electrolysis device of the second embodiment, and Fig. 16B is a front-view diagram illustrating an electrode plate in Variation 5 of the electrolysis device of the second embodiment.
Fig. 17A is a front-view diagram illustrating an electrode plate in Variation 6 of the electrolysis device of the second embodiment, and Fig. 17B is a cross-sectional diagram along line B-B of Fig. 17A.
Fig. 18A is a cross-sectional diagram illustrating the flow of water inside a container in Variation 6, and Fig. 18B is a cross-sectional diagram illustrating the flow of water inside a container in Variation 7.
Fig. 19 is a cross-sectional diagram illustrating Variation 8 of the electrolysis device of the second embodiment.
Fig. 20 is a configuration diagram illustrating a heat pump hot-water supply apparatus according to the present invention.
Figs. 21A and 21B are cross-sectional diagrams illustrating an electrolysis device according to a third embodiment, i.e. the present invention.
Fig. 22A is a cross-sectional diagram illustrating Variation 1 of the electrolysis device of the third embodiment, Fig. 22B is a cross-sectional diagram illustrating Variation 2 of the electrolysis device of the third embodiment, and Fig. 22C is a cross-sectional diagram illustrating Variation 3 of the electrolysis device of the third embodiment. These variations are not part of the present invention.
Fig. 23A is a cross-sectional diagram illustrating Variation 4 of the electrolysis device of the third embodiment, Fig. 23B is a cross-sectional diagram illustrating Variation 5 of the electrolysis device of the third embodiment, Fig. 23C is a cross-sectional diagram illustrating Variation 6 of the electrolysis device of the third embodiment, and Fig. 23D is a cross-sectional diagram illustrating Variation 7 of the electrolysis device of the third embodiment. These variations are not part of the present invention.
Fig. 24A is a cross-sectional diagram illustrating Variation 8 of the electrolysis device of the third embodiment, Fig. 24B is a cross-sectional diagram illustrating Variation 9 of the electrolysis device of the third embodiment, and Fig. 24C is a cross-sectional diagram illustrating Variation 10 of the electrolysis device of the third embodiment.
Fig. 25A is a cross-sectional diagram illustrating Variation 11 of the electrolysis device of the third embodiment, Fig. 25B is a cross-sectional diagram illustrating Variation 12 of the electrolysis device of the third embodiment, and Fig. 25C is a cross-sectional diagram illustrating Variation 13 of the electrolysis device of the third embodiment. These variations are not part of the present invention.
Figs. 26A and 26B are cross-sectional diagrams illustrating Variation 14 of the electrolysis device of the third embodiment (not part of the invention).
Fig. 27A is a side-view diagram illustrating Variation 15 of the electrolysis device of the third embodiment, and Fig. 27B is a cross-sectional diagram of the electrolysis device of Variation 15 (not part of the present invention).
Fig. 28 is a schematic diagram illustrating the configuration of a cooling tower, a combustion-type hot-water supply apparatus or electric water warmer that is provided with the electrolysis device of the first embodiment or the second embodiment.
Fig. 29 is a schematic diagram illustrating the configuration of a cooling tower, a combustion-type hot-water supply apparatus or electric water warmer that is provided with the electrolysis device of the third embodiment (not part of the invention).

### Description of Embodiments

### Heat pump hot-water supply apparatus

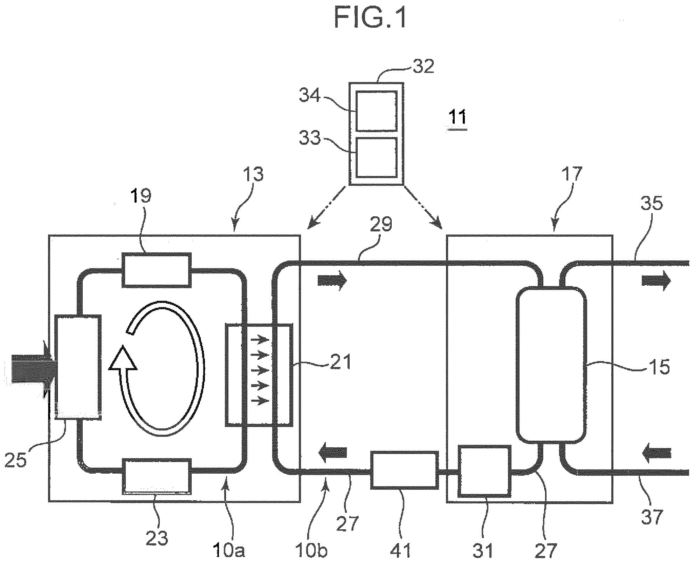

A heat pump hot-water supply apparatus 11 according to the present invention will be explained next with reference to accompanying drawings. As illustrated in Fig. 1, the heat pump hot-water supply apparatus 11 is provided with a heat pump unit 13, a hot water storage unit 17, an electrolysis device 41 and a controller 32 that controls the foregoing.

The hot water storage unit 17 has a tank 15 that stores water, a pump 31 and water conduits 27, 29. The tank 15 and the water heat exchanger 21 are connected to each other by way of the water conduits 27, 29. The water conduits 27, 29 include a water inlet pipe 27 that has a feed-side flow channel through which water from the tank 15 is fed to the water heat exchanger 21, and a hot water outlet pipe 29 having a return-side flow channel through which water heated in the water heat exchanger 21 through exchange of heat, is returned to the tank 15. A pump 31 for feeding water is provided in the water inlet pipe 27. The pump 31 causes water in the tank 15 to flow out from a lower part of the tank 15 towards the water inlet pipe 27, and to return to an upper part of the tank 15 by passing through the water inlet pipe 27, the water heat exchanger 21 and the hot water outlet pipe 29, in this order.

The heat pump hot-water supply apparatus 11 is provided with a refrigerant circuit 10a and a hot water storage circuit 10b. The refrigerant circuit 10a comprises a compressor 19, a water heat exchanger 21, a motor-operated expansion valve 23 as an expansion mechanism, an air heat exchanger 25, and a refrigerant pipe that connects the foregoing. The hot water storage circuit 10b comprises the tank 15, the pump 31, the water heat exchanger 21, the electrolysis device 41 and the water conduits 27, 29 that connect the foregoing.

In the present embodiment, carbon dioxide is used as the refrigerant that circulates through the refrigerant circuit 10a, but the embodiment is not limited thereto. The refrigerant that circulates through the refrigerant circuit 10a exchanges heat, in the water heat exchanger 21, with water circulating through the hot water storage circuit 10b, so that the water is heated as a result. In the air heat exchanger 25, the refrigerant exchanges heat with outside air and absorbs heat from the latter.

A water supply pipe 37 and a hot water supply pipe 35 are connected to the tank 15. The hot water supply pipe 35 is connected to an upper part of the tank 15. The purpose of the hot water supply pipe 35 is to retrieve high-temperature water stored inside the tank 15 and to supply hot water to a bathtub or the like. The water supply pipe 37 is connected to the bottom of the tank 15. The purpose of the water supply pipe 37 is to supply low-temperature water from a water supply source into the tank 15. For instance, tap water or groundwater such as well water can be used as the water supply source that supplies water to the tank 15. The water heater 11 in the present embodiment is a once-through water heater wherein hot water supplied through the hot water supply pipe 35 is not returned to the tank 15.

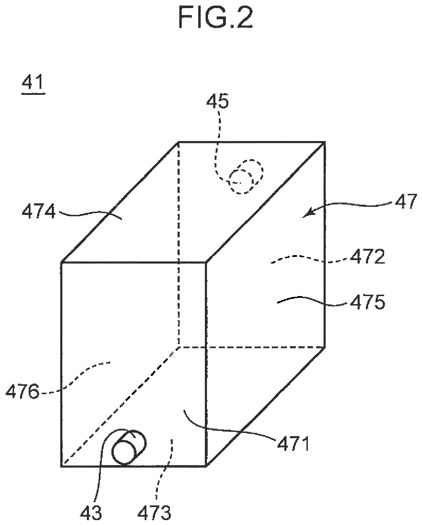

Fig. 2 is a plan-view diagram illustrating the electrolysis device 41 according to an embodiment of the present invention. The electrolysis device 41 is provided, in the water inlet pipe 27, at a position downstream of the pump 31 and upstream of the water heat exchanger 21 or upstream of the pump 31 and upstream of the heat exchanger 21. The purpose of the electrolysis device 41 is to remove the scale component comprised in water that is fed to the water heat exchanger 21. In a below-described first embodiment, second embodiment and third embodiment, the electrolysis device 41, takes on the shape such as the one illustrated in Fig. 2, but is not limited thereto.

The electrolysis device 41 is provided with agitation means for agitating, between adjacent electrodes, water that flows from the water inlet port towards the water outlet port. The agitation means may be configured out of a component separate from the electrodes, or may be formed in the electrodes themselves. The agitation means in the below-described first embodiment and third embodiment is configured out of a component separate from the electrodes. The agitation means in the below-described second embodiment is formed in the electrodes themselves. The third embodiment forms the present invention. The electrolysis device 41 may combine the features of two or more embodiments selected from among the first embodiment, the second embodiment and the third embodiment. The electrolysis device 41 will be explained in detail further on.

The controller 32 has a control unit 33 and a memory (storage unit) 34. The control unit 33 controls a heat-up operation of heating water in the tank 15, on the basis of a heat-up operation schedule that is stored in the memory 34. The control unit 33 controls for instance a power source 50 that supplies power to the electric circuits of the electrolysis device 41 described below. For instance, a DC power source is used as the power source 50.

The operation of the heat pump hot-water supply apparatus 11 will be explained next. In the heat-up operation of heating water in the tank 15, the control unit 33 drives the compressor 19 of the heat pump unit 13, regulates the degree of opening of the motor-operated expansion valve 23, and drives the pump 31 of the hot water storage unit 17. As a result, the low-temperature water in the tank 15 is fed out through a water outlet that is provided at the bottom of the tank 15, is fed to the water heat exchanger 21 via the water inlet pipe 27, and is heated in the water heat exchanger 21, as illustrated in Fig. 1. The heated high-temperature water passes through the hot water outlet pipe 29 and is returned to the tank 15 through a water inlet that is provided at an upper part of the tank 15. As a result, high-temperature water goes on being sequentially stored in the tank 15, through the top of the latter. In this heat-up operation, the scale component comprised in the water is removed by the electrolysis device 41.

The heat pump hot-water supply apparatus 11 of the present embodiment is a once-through water heater. In the once-through water heater 11, the water (hot water) supplied through the hot water supply pipe 35 is used by the user, and does not return to the tank 15. Therefore, an amount of water that is substantially identical to the amount of water supplied from the tank 15 via the hot water supply pipe 35 is supplied herein to the tank 15 from the water supply source, via the water supply pipe 37. That is, water comprising a scale component from the water supply source, such as tap water or well water, is replenished into the tank 15 at a high frequency, and in a substantial replenishment amount. In the case of a once-through heat pump hot-water supply apparatus, therefore, the scale component must be removed more efficiently than in the case of a cooling water circulation system of recirculating type, or of a recirculating water heater.

### Electrolysis device

### (First embodiment - not part of the invention)

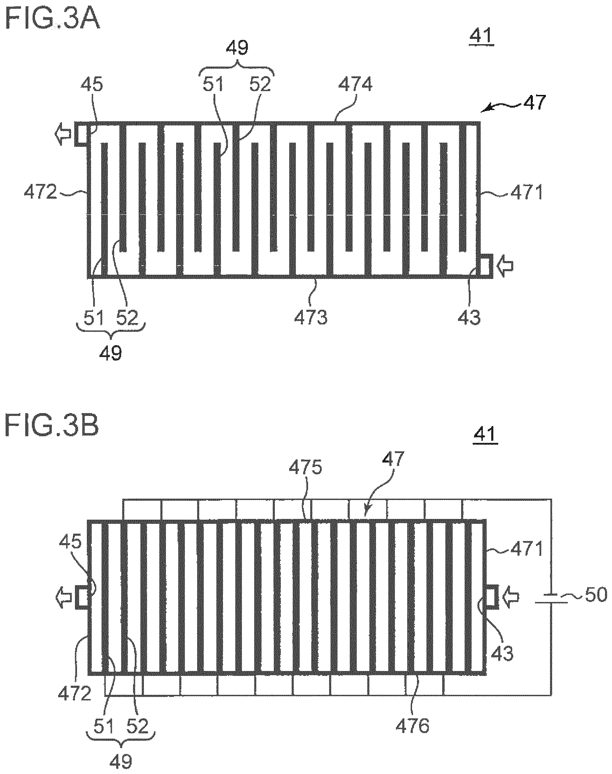

Fig. 3A is a cross-sectional diagram of the electrolysis device 41 illustrated in Fig. 2 cut along a plane parallel to the vertical direction, and Fig. 3B is a cross-sectional diagram of the electrolysis device 41 illustrated in Fig. 2 cut along a plane parallel to the horizontal direction.

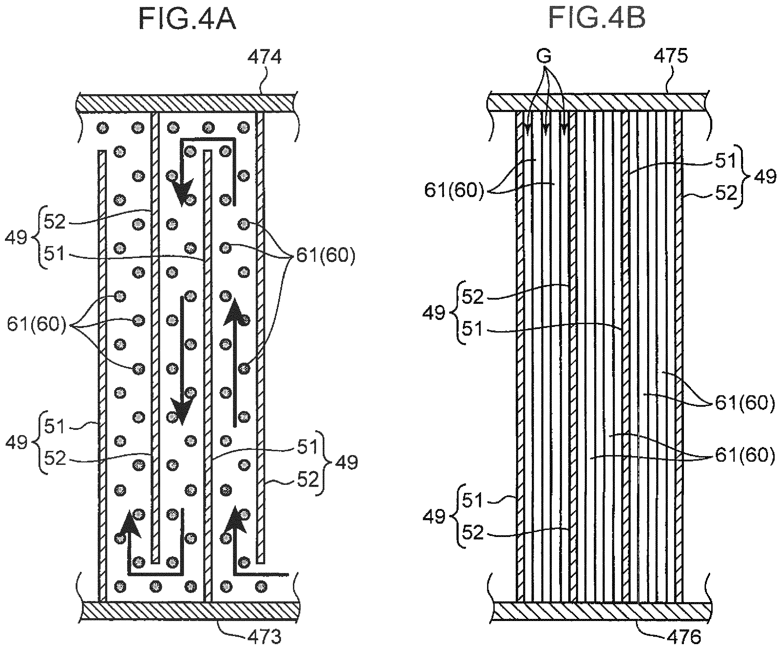

The electrolysis device 41 comprises a container 47 having a water inlet port 43 and a water outlet port 45, a plurality of first electrodes 51 and a plurality of second electrodes 52 disposed in the container 47, and an agitation unit 60 (see Fig. 4A), as agitation means. The agitation unit 60 will be explained further on.

The first electrodes 51 and the second electrodes 52 are formed of a material having excellent corrosion resistance. Examples of the material that makes up the electrodes include platinum, titanium and the like. The particulars are as follows.

For instance the electrodes are formed of a material such that at least the surface has platinum as a main component. Specifically, the form of the electrodes may be such that the entire electrode is formed of a material having platinum as a main component (i.e. a material such as platinum or a platinum alloy). The electrodes may be of a form wherein each electrode has an electrode body formed out of a material having a greater ionization tendency than that of platinum (i.e. a material that oxidizes more readily in water than platinum), and a coating layer that is formed, on the surface of the electrode body, out of a material having platinum as a main component (i.e. a material such as platinum or a platinum alloy). Examples of the material of the electrode body include, for instance, materials having titanium as a main component (i.e. a material such as titanium or a titanium alloy).

The electrodes may be embodied as being formed, for instance, out of a material having titanium as a main component (i.e. titanium or a titanium alloy), as a material that oxidizes in water more readily than platinum but that has comparatively superior corrosion resistance.

The plurality of first electrodes 51 and the plurality of second electrodes 52 are arrayed in one direction (thickness direction of the electrodes) in such a manner that the first electrodes 51 and the second electrodes 52 are disposed alternately. The plurality of first electrodes 51 and the plurality of second electrodes 52 are connected to the power source 50 in such a manner that one of adjacent electrodes functions as an anode and the other adjacent electrode functions as a cathode. Herein adjacent electrodes 51, 52 make up a respective electrode pair 49. In the present embodiment, the plurality of first electrodes 51 and the plurality of second electrodes 52 are connected in parallel to the power source 50, but the embodiment is not limited thereto. For instance, a DC power source is used as the power source 50.

The electrodes may adopt various shapes, for instance a plate shape or rod shape, but a plate shape is resorted to in the present embodiment. The surface area of the electrodes can be made greater as a result. The plurality of first electrodes 51 and the plurality of second electrodes 52 in the present embodiment are disposed parallel to each other, and are arrayed in the thickness direction of the electrodes. Further, the plurality of first electrodes 51 and the plurality of second electrodes 52 in the present embodiment are disposed in such a manner that a meandering flow channel is formed through which water flows while meandering, inside the container 47. The particulars are as follows.

As illustrated in Fig. 2 and Figs. 3A and 3B, the container 47 has a substantially rectangular parallelepiped shape made up of six wall sections. These wall sections form a water flow space through which water flows. The six wall sections include a first wall section 471, a second wall section 472, a third wall section 473, a fourth wall section 474, a fifth wall section 475 and a sixth wall section 476.

The first wall section 471 is positioned upstream in the flow of water, and the second wall section 472 is positioned downstream in the flow of water, at an attitude parallel to that of the first wall section 471. The first wall section 471 and the second wall section 472 are disposed parallel to the first electrodes 51 and the second electrodes 52. The peripheral edges of the first wall section 471 and the second wall section 472 are joined by the third to sixth wall sections. The third wall section 473 is positioned on the lower side, and the fourth wall section 474 is positioned on the upper side, parallel to the third wall section 473. The fifth wall section 475 is positioned at the right as one faces downstream, and the sixth wall section 476 is positioned at the left as one faces downstream, parallel to the fifth wall section 475.

The water inlet port 43 of the container 47 is provided at a lower part of the first wall section 471, and the water outlet port 45 is provided at an upper part of the second wall section 472. The water inlet pipe 27 positioned on the pump 31 side is connected to the water inlet port 43, and the water inlet pipe 27 positioned on the water heat exchanger 21 side is connected to the water outlet port 45. Water that is fed by the pump 31 to the electrolysis device 41 via the water inlet pipe 27 flows through the water inlet port 43 into the water flow space inside the container 47. Water that has flowed into the water flow space flows then downstream in the flow of water, and is discharged through the water outlet port 45 out of the container 47. The water outlet port 45 will be explained further on.

The electrodes 51, 52 are arrayed along the horizontal direction, spaced apart from each other in the thickness direction of the electrodes. The gaps between electrodes function as a flow channel through which water flows. Among the plurality of electrodes 51, 52, the electrodes in contact with the third wall section 473 and the electrodes in contact with the fourth wall section 474 are juxtaposed alternately. Specifically, the first electrodes 51 are in contact with the third wall section 473, and extend towards the fourth wall section 474. Gaps through which water can flow are provided between each of the first electrodes 51 and the inner face of the fourth wall section 474. The second electrodes 52 are in contact with the fourth wall section 474, and extend towards the third wall section 473. Gaps through which water can flow are provided between each of the second electrodes 52 and the inner face of the third wall section 473. A meandering flow channel such as the one illustrated in Fig. 3A becomes formed as a result inside the container 47.

In the present embodiment, the electrodes are disposed parallel to a vertical direction, and hence the meandering flow channel as well meanders in the vertical direction. The electrodes may be disposed parallel to a direction that is oblique with respect to the vertical direction. In this case, both the flow channels in which water rises and the flow channel in which water descends, in the meandering flow channel, extend in a direction that is oblique with respect to the vertical direction.

In the electrolysis device 41 having such a structure, the scale component in the water precipitates in the form of scale, by electrolysis, on the cathode of each electrode pair that is made up of adjacent electrodes, over the lapse of time until the water that has flowed through the water inlet port 43 into the container 47 flows out of the container 47 through the water outlet port 45. The scale deposited on the cathodes is caused to come off therefrom, for instance through periodic reversal of the polarity of the electrodes 51, 52, and to sediment on the third wall section 473 of the container 47.

The agitation unit 60 will be explained next. The purpose of the agitation unit 60 is to agitate the water that flows between adjacent electrodes 51, 52 that make up an electrode pair 49. The agitation unit 60 is a member separate from the electrodes. In the present embodiment, the agitation unit 60 includes a plurality of agitation members 61, as illustrated in Figs. 4A and 4B.

The agitation members 61 in the present embodiment are rod-like members having a columnar shape, but are not limited thereto. The agitation members 61 that are used may be rod-like members having a prismatic shape, or may have various shapes, as illustrated for instance in Variations 1 and 2 described below.

The agitation members 61 extend in a direction that intersects the direction of water flow (the direction denoted by the arrows in Fig. 4A). In the present embodiment, the agitation members 61 extend in a direction perpendicular to the direction of water flow, and are disposed so as to be parallel to the electrodes 51, 52.

The plurality of agitation members 61 is provided between adjacent electrodes 51, 52. The plurality of agitation members 61 is arrayed along the direction of water flow between adjacent electrodes 51, 52. In the present embodiment, the plurality of agitation members 61 in the flow channel of water includes a plurality of first agitation members 61 disposed at positions closer to the first electrodes 51 than the second electrodes 52, and a plurality of second agitation members 61 disposed at positions closer to the second electrodes 52 than the first electrodes 51. In the present embodiment, the first agitation members 61 and the second agitation members 61 are disposed alternately along the direction of water flow, but are not limited thereto.

As illustrated in Fig. 4B, one end of each of the agitation members 61 of the present embodiment is supported on the fifth wall section 475, while the other end is supported on the sixth wall section 476. The agitation members 61 are disposed in a state where a gap is left between the agitation members 61 and both electrodes 51, 52, but are not limited thereto. The agitation members 61 may for instance be disposed in a state of being in contact with one of the electrodes.

By providing a gap between the agitation members 61 and both electrodes 51, 52, a pathway is created wherein the flow of water that flows between the electrodes 51, 52 is split at the agitation members 61, and the resulting flow paths merge again after having passed the agitation members 61. That is, the water that flows between the electrodes 51, 52 is agitated efficiently by being repeatedly caused to split and merge on account of the plurality of agitation members 61 that are arrayed, along the direction of water flow, between the electrodes 51, 52.

In the present embodiment, as illustrated in Fig. 4B, regions (gaps G) at which the agitation members 61 are not provided are present between adjacent electrodes 51, 52, when the adjacent electrodes 51, 52 and the plurality of agitation members 61 are viewed in the direction of water flow (or a direction opposite to the direction of water flow). Specifically, gaps G are provided between a region at which the plurality of first agitation members 61 is arrayed, and a region at which the plurality of second agitation members 61 is arrayed, as illustrated in Fig. 4B. Gaps G are also provided between the first electrodes 51 and the region at which the plurality of first agitation members 61 is arrayed, and gaps G are likewise provided between the second electrodes 52 and the region at which the plurality of second agitation members 61 is arrayed. It becomes possible as a result to curtail increases in the resistance to water flow (increases in pressure loss).

In the present embodiment, the plurality of agitation members 61 is provided between adjacent electrodes 51, 52 in all the electrode pairs 49, but the embodiment is not limited thereto. For instance, a configuration may be adopted wherein the plurality of agitation members 61 is provided between the electrodes 51, 52 in some of the electrode pairs 49, such that agitation members 61 are not provided between the electrodes 51, 52 of the remaining electrode pairs 49.

The agitation members 61 are formed of an insulating material, but are not limited thereto. Examples of insulating materials include, for instance, insulating synthetic resins.

One example of the operating conditions at the time of electrolysis in the present embodiment follows next. The flow rate of water flowing into the container 47 via the water inlet port 43 is adjusted to be for instance, about 0.6 to 1.2 L/minute. The flow velocity of the water flowing through the meandering flow channel inside the container 47 is adjusted to about 6 to 13 mm/second. In this case, the size of the flow channel (cross-sectional area thereof) is adjusted in such a manner that the Reynolds number for the flow of water in the meandering flow channel ranges from about 90 to about 200. The flow rate, flow velocity and Reynolds number are examples of operating conditions, and are not limited to the above ranges. The flow velocity and the Reynolds number are adjusted so that a respective average value of values measured at a plurality of sites in the meandering flow channel lies within the above respective range. In a case where flow in the meandering flow channel exhibits a flow velocity distribution, the flow velocity of water that flows through the central section between the electrodes 51, 52 for which flow velocity is greatest is about twice as large as the flow velocity of water that flows in the vicinity of these electrodes.

Water flowing in the vicinity of the electrodes does not mix readily with surrounding water in a case where the flow velocity of water flowing through the meandering flow channel within the container 47 is low, of about 6 to 13 mm/second, as in the present embodiment. In conventional electrolysis devices that are not provided with the agitation unit 60, water of low scale component concentration is prone, in such a case, to drift to the vicinity of those electrodes that function as anodes. In the present embodiment, by contrast, it becomes possible to suppress drifting of water of low scale component concentration towards the vicinity of those electrodes that function as anodes, even at such low velocity, and hence the precipitation reaction of the scale component between the electrodes 51, 52 is accordingly promoted.

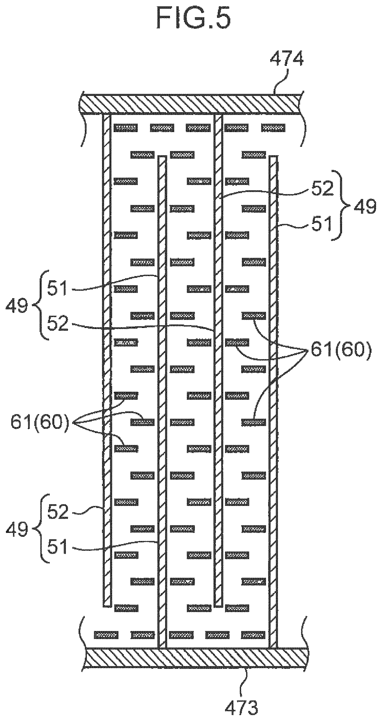

Fig. 5 is a cross-sectional diagram illustrating Variation 1 of the electrolysis device 41. The shape of the agitation members 61 in Variation 1 differs from that in the embodiment illustrated in Figs. 4A and 4B. Only those features of Variation 1 that differ from the features in the above embodiment illustrated in Figs. 4A and 4B will be explained herein. Features identical to those of the embodiment will not be explained again.

As illustrated in Fig. 5, the agitation members 61 in Variation 1 have a flat plate shape such that the dimension of the agitation members 61 in the direction of water flow is smaller than the dimension in the direction perpendicular to the direction of water flow. The agitating effect on water is higher as a result in Variation 1 than in the above embodiment.

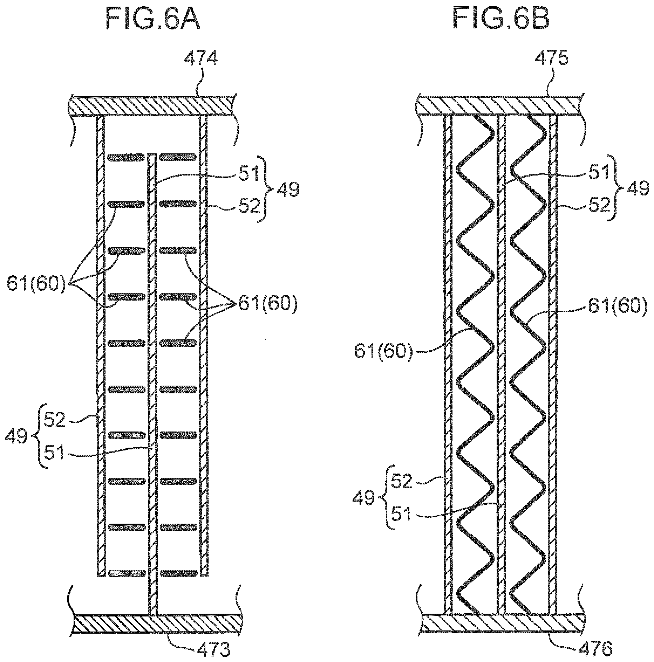

Figs. 6A and 6B are cross-sectional diagrams illustrating Variation 2 of the electrolysis device 41. Fig. 6A is a cross-sectional diagram of the electrolysis device 41 cut along a plane parallel to the vertical direction, and Fig. 6B is a cross-sectional diagram of the electrolysis device 41 cut along a plane parallel to the horizontal direction. The shape of the agitation members 61 in Variation 2 differs from that in the embodiment illustrated in Figs. 4A and 4B. Only those features of Variation 2 that differ from the features in the above embodiment illustrated in Figs. 4A and 4B will be explained herein. Features identical to those of the embodiment will not be explained again.

As illustrated in Figs. 6A and 6B, the agitation members 61 in Variation 2 have a shape that extends in a direction perpendicular to the direction of water flow, between adjacent electrodes 51, 52 that make up an electrode pair 49, while meandering from the first electrode 51 towards the second electrode 52. The agitation members 61 are formed, for instance, through bending of a rod-like member, having for example a columnar or prismatic shape. The agitation members 61 may be configured by being bent in the form of a coil.

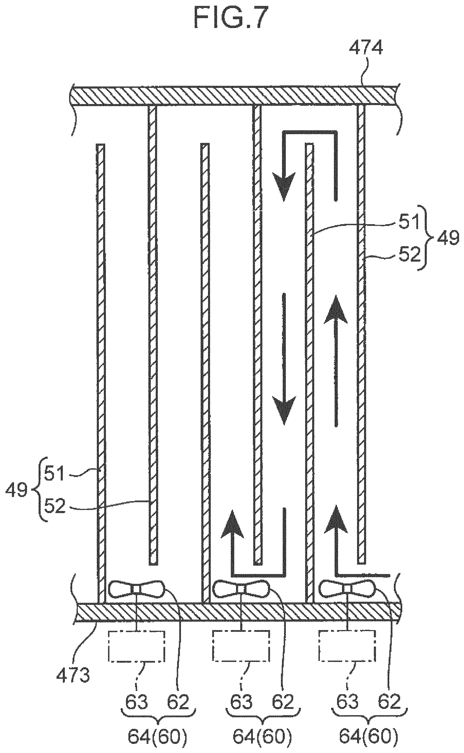

Fig. 7 is a cross-sectional diagram illustrating Variation 3 of the electrolysis device 41. The configuration of the agitation unit 60 in Variation 3 differs from that of the embodiment illustrated in Figs. 4A and 4B. The particulars are as follows.

In Variation 3, the agitation unit 60 comprises a plurality of stirrers 64 each of which has a stirring blade 62 disposed between adjacent electrodes 51, 52, and a motor 63 connected to the stirring blade 62, as illustrated in Fig. 7. Each stirring blade 62 in Variation 3 is provided at a turn-back section of the meandering flow channel. Further, each stirring blade 62 is provided at the lower turn-back section, and is disposed in the vicinity of the inner face of the third wall section 473. The rotation axes of the stirring blades 62 point in the direction of water flow.

The stirring blades 62 are disposed at positions that enable agitation of water from the third wall section 473 towards the fourth wall section 474. Upon rotation of the stirring blades 62, water in the vicinity thereof becomes agitated while being pushed so as to flow towards the fourth wall section 474. In Variation 3, specifically, parallel flow along the direction of water flow is formed, by virtue of the rotation of the stirring blades 62, and hence the flow of water inside the container 47 is smoother. The stirring blades 62 may be provided at positions such that flow is formed that runs against the direction of water flow.

The shape of the stirring blades 62 in Variation 3 may be, for instance, of propeller type or turbine type, so long as it is a shape that allows agitating water inside the container 47.

In Variation 3, the removal efficiency of scale component can be enhanced while suppressing increases in power consumption in the stirrers 64, if the rotational velocity of the stirring blades 62 is controlled in accordance with, for instance, the flow velocity of water flowing between adjacent electrodes 51, 52 and the value of current that flows in the electrodes 51, 52.

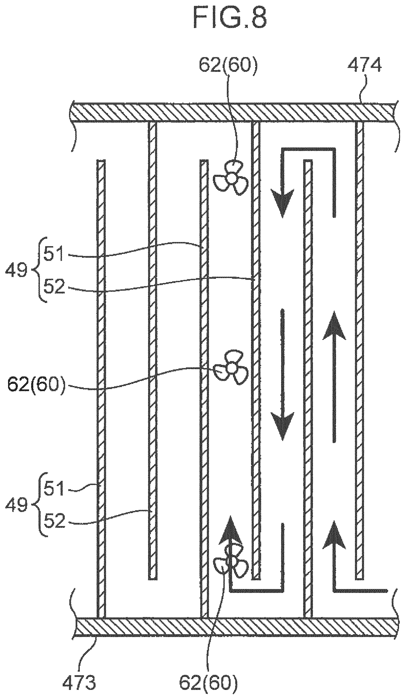

Fig. 8 is a cross-sectional diagram illustrating Variation 4 of the electrolysis device 41. The arrangement of the stirring blades 62 in Variation 4 is different from that in Variation 3. The particulars are as follows.

In Variation 4, as illustrated in Fig. 8, the agitation unit 60 has a plurality of stirring blades 62 that are arrayed along the flow channel between the third wall section 473 and the fourth wall section 474. The rotation axes of the stirring blades 62 point in a direction perpendicular to the direction of water flow. The stirring blades 62 are supported, for instance, on motor shafts, not shown, that extend from the fifth wall section 475 towards the sixth wall section 476.

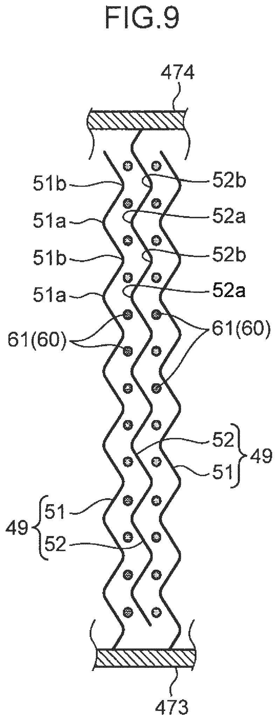

Fig. 9 is a cross-sectional diagram illustrating Variation 5 of the electrolysis device 41. The shape of the electrodes 51, 52 in Variation 5 differs from that in the embodiment illustrated in Figs. 4A and 4B. The particulars are as follows.

As illustrated in Fig. 9, the electrodes in Variation 5 have a wavy shape, and hence the electrodes 51, 52 elicit as well a water agitation effect, in addition to the water agitation effect by the plurality of agitation members 61.

In Variation 5, the pitch of the first electrodes 51, i.e. the distance the between a ridge 51a and another ridge 51a of the first electrodes 51, and the pitch of the second electrodes 52, i.e. the distance between a ridge 52a and another ridge 52a of the second electrodes 52, are identical. The same applies to troughs 51b, 52b. The adjacent first electrodes 51 and second electrodes 52 are disposed in such a manner that the flow channel width between the foregoing is substantially constant throughout. The current density within the electrode planes can be kept thereby substantially constant. The flow channel is not prone to narrowing on account of deposition of scale, since no locally narrow sites are formed in the flow channel.

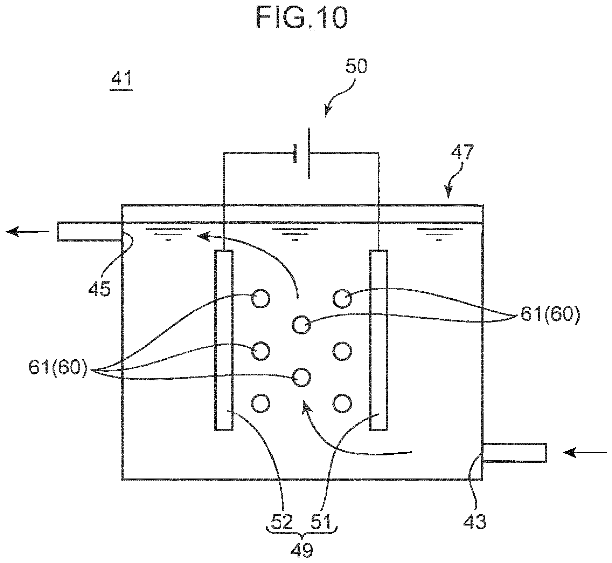

Fig. 10 is a cross-sectional diagram illustrating Variation 6 of the electrolysis device 41. As illustrated in Fig. 10, Variation 6 differs from the embodiment illustrated in Figs. 4A and 4B in that herein there is no meandering flow channel. The particulars are as follows.

As illustrated in Fig. 10, the electrolysis device 41 comprises the container 47 that has the water inlet port 43 and the water outlet port 45, and the first electrode 51 and the second electrode 52 disposed in the container 47. In Variation 6, the lower ends of the electrodes are spaced apart from the bottom surface of the container 47, and the upper ends of the electrodes are spaced apart from the upper surface of the container 47; hence, there is no meandering flow channel such as the above-described one. Therefore, the water that flows into the container 47 through the water inlet port 43 flows thereupon, somewhat randomly, from the water inlet port 43, through the interior of the container 47, towards the water outlet port 45. The scale component is removed as the water passes through the gaps between the adjacent electrodes while in the way to the water outlet port 45.

In Variation 6, the agitation unit 60 is provided between adjacent electrodes 51, 52. The agitation unit 60 has a plurality of agitation members 61. The agitation members 61 that can be used herein may be the agitation members 61 of the embodiment illustrated in Figs. 4A and 4B, the agitation members 61 of Variation 1 illustrated in Fig. 5, or the agitation members 61 of Variation 2 illustrated in Fig. 6.

In the embodiment illustrated in Figs. 4A and 4B and the variations thereof, as explained above, the electrolysis device 41 is provided with the agitation unit 60, and hence water flowing between the electrodes 51, 52 is agitated by the agitation unit 60. It becomes possible as a result to suppress drifting of water of low scale component concentration towards the vicinity of those electrodes that function as anodes, and hence the precipitation reaction of the scale component between the electrodes 51, 52 is accordingly promoted. Therefore, the removal efficiency of scale component in the water can be enhanced even without increasing the surface area of the electrodes by resorting to a means such as increasing the number of electrodes or increasing the size of the electrodes. Therefore, it becomes possible to enhance the removal efficiency of scale component while curtailing increases in cost derived from electrode materials.

In the embodiment illustrated in Figs. 4A and 4B and Variations 1, 2, 5 and 6, the agitation unit 60 includes the plurality of agitation members 61 that are arrayed, between adjacent electrodes 51, 52, in the direction of water flow. In these configurations, the removal efficiency of scale component can be enhanced by just resorting to a simple structure, namely an array of a plurality of agitation members 61 along the direction of water flow.

The agitation members 61 in the embodiment illustrated in Figs. 4A and 4B and Variations 1, 2, 5 and 6 are formed of an insulating material, and hence are advantageous in terms of not being corroded readily, even when subjected to an electrolytic treatment over long periods of time in a state where the agitation members 61 are disposed between adjacent electrodes 51, 52.

In the embodiment illustrated in Figs. 4A and 4B and Variations 1, 2, 5 and 6, the agitation members 61 extend, between adjacent electrodes 51, 52, in a direction that intersects the direction of water flow. The water flowing between the electrodes 51, 52 can be therefore agitated effectively. Moreover, the agitation members 61 are disposed in a state where gaps are provided between adjacent electrodes 51, 52, and hence water can be agitated with good efficiency. By providing a gap between the agitation members 61 and both electrodes 51, 52, a pathway is created wherein the flow of water that flows between the electrodes 51, 52 is split at the agitation members 61, and the resulting flow paths merge again after having passed the agitation members 61. Water can be agitated as a result with good efficiency.

In Variations 3 and 4, the agitation unit 60 includes the stirrers 64 that have stirring blades 62 disposed inside the container 47, and the motors 63 connected to the stirring blades 62. Hence, the water inside the container 47 is forcibly agitated by the stirring blades 62, and the effect of enhancing the removal efficiency of scale component is therefore increased.

In the embodiment illustrated in Figs. 4A and 4B and Variations 1 to 5, the plurality of electrodes 51, 52 is plate-shaped, and forms a meandering flow channel through which water flows while meandering, inside the container 47. In these configurations, therefore, the water that has flowed into the container 47 through the water inlet port 43 flows along a meandering pathway along the plate-shaped electrodes, from the upstream side towards the downstream side. Therefore, the contact surface area between the electrodes and the water increases, and the removal efficiency of scale component can be further enhanced.

### (Second embodiment - not part of the invention)

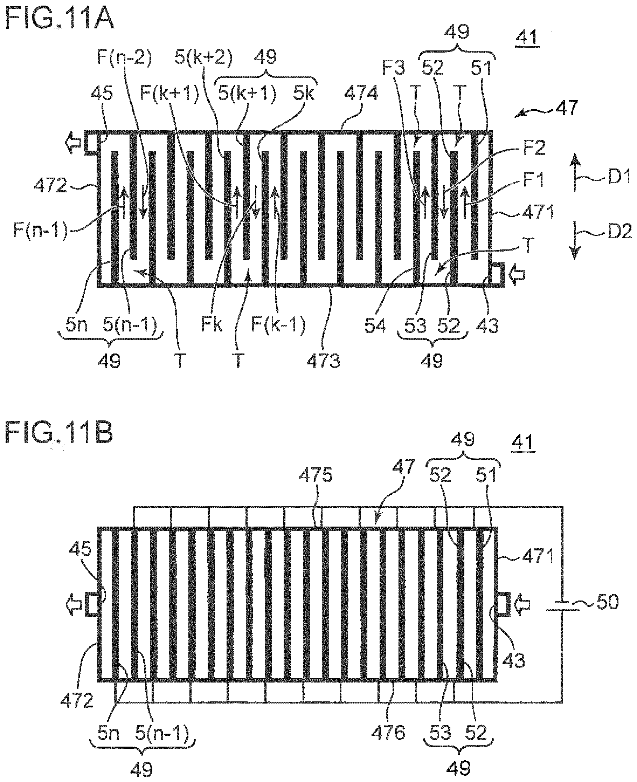

The electrolysis device 41 of a second embodiment has an inflow section as agitation means provided in the electrodes. Fig. 11A is a cross-sectional diagram of the electrolysis device 41 illustrated in Fig. 2 cut along a plane parallel to the vertical direction, and Fig. 11B is a cross-sectional diagram of the electrolysis device 41 illustrated in Fig. 2 cut along a plane parallel to the horizontal direction.

The electrolysis device 41 comprises a container 47 having a water inlet port 43 and a water outlet port 45, and a plurality of electrode plates 51 to 5n accommodated in the container 47. The electrode plates are formed of a material having excellent corrosion resistance. The same material exemplified in the first embodiment can be used as the material that makes up the electrode plates.

The plurality of electrode plates 51 to 5n is made up of n electrode plates that include a first electrode plate 51, a second electrode plate 52, a third electrode plate 53... and an n-th electrode plate 5n. The plurality of electrode plates 51 to 5n is arrayed in one direction (thickness direction of the electrode plates). The plurality of electrode plates 51 to 5n is connected to the power source 50 in such a manner that one electrode plate from among adjacent electrode plates functions as an anode, and the other adjacent electrode plate functions as a cathode (Fig. 11B). Herein adjacent electrode plates make up a respective electrode pair 49. In the present embodiment, the plurality of electrode plates 51 to 5n is connected to the power source 50 in parallel, but are not limited thereto. For instance, a DC power source is used as the power source 50.

The electrode plates may adopt various plate shapes, for instance a flat plate shape, a wavy plate shape or the like. The surface area of the electrodes can be made greater as a result. The flat plate shape is resorted to in the present embodiment. The electrode plates 51 to 5n in the present embodiment are disposed parallel to each other.

Inside the container 47 there are formed a first flow channel F1, being a gap between a first electrode plate 51 and a second electrode plate 52, and through which water flows in a first direction D1, a second flow channel F2, being a gap between the second electrode plate 52 and the third electrode plate 53, and through which water flows in a second direction D2, opposite the first direction D1, and a turn-back section T that connects the downstream end of the first flow channel F1 and the upstream end of the second flow channel F2.

Likewise hereafter, there is formed a k-th flow channel Fk being a gap between a k-th electrode plate 5k and a (k+1)-th electrode plate 5(k+1), and through which water flows in the second direction D2, a (k+1)-th flow channel F(k+1) being a gap between the (k+1)-th electrode plate 5(k+1) and a (k+2)-th electrode plate 5(k+2), and through which water flows in the first direction D1, and a turn-back section T that connects a downstream end of the k-th flow channel Fk and an upstream end of the (k+1)-th flow channel F(k+1).

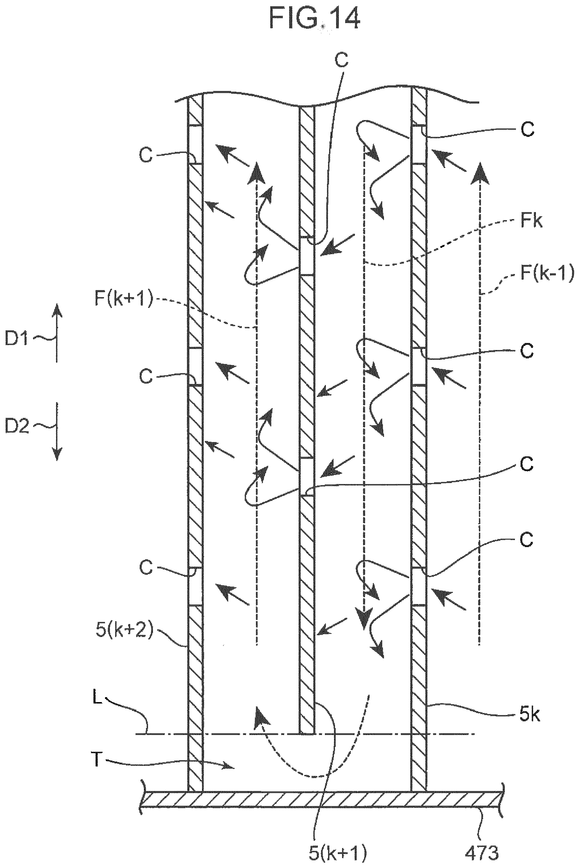

In the present embodiment, the boundary between the turn-back section T and the downstream end of the flow channel Fk, and the boundary between the turn-back section T and the upstream end of the flow channel F(k+1) are positions denoted by the dashed line L in the cross-sectional diagram of Fig. 14. The dashed line L is a straight line parallel to the thickness direction of the electrode plate 5(k+1) and that passes through the end of the electrode plate 5(k+l) (end adjacent to the turn-back section T).

The plurality of electrode plates 51 to 5n in the present embodiment is disposed in such a manner that a meandering flow channel is formed, through which water flows while meandering, inside the container 47. The particulars are as follows.

As illustrated in Fig. 2 and Figs. 11A and 11B, the container 47 has a substantially rectangular parallelepiped shape made up of six wall sections. These wall sections form a water flow space through which water flows. The six wall sections include a first wall section 471, a second wall section 472, a third wall section 473, a fourth wall section 474, a fifth wall section 475 and a sixth wall section 476.

The first wall section 471 is positioned upstream in the flow of water, and the second wall section 472 is positioned downstream in the flow of water, parallel to the first wall section 471. The first wall section 471 and the second wall section 472 are disposed parallel to the first electrode plate 51 and the second electrode plate 52. The peripheral edges of the first wall section 471 and the second wall section 472 are joined by the third to sixth wall sections. The third wall section 473 is positioned on the lower side, and the fourth wall section 474 is positioned on the upper side, parallel to the third wall section 473. The fifth wall section 475 is positioned at the right as one faces downstream, and the sixth wall section 476 is positioned at the left as one faces downstream, parallel to the fifth wall section 475.

The water inlet port 43 of the container 47 is provided at a lower part of the first wall section 471, and the water outlet port 45 is provided at an upper part of the second wall section 472. The water inlet pipe 27 positioned on the pump 31 side is connected to the water inlet port 43, and the water inlet pipe 27 positioned on the water heat exchanger 21 side is connected to the water outlet port 45. Water that is fed by the pump 31 to the electrolysis device 41 via the water inlet pipe 27 flows through the water inlet port 43 into the water flow space inside the container 47. Water that has flowed into the water flow space flows then downstream in the flow of water, and is discharged through the water outlet port 45 out of the container 47.

The electrode plates 51 to 5n are arrayed along the horizontal direction spaced apart from each other in the thickness direction of the electrode plates. The gaps between electrode plates function as the flow channel F1 to F(n-1) through which water flows. Among the plurality of electrode plates 51 to 5n, the electrode plates in contact with the third wall section 473 and the electrode plates in contact with the fourth wall section 474 are juxtaposed alternately. Specifically, the former electrode plates 52, 54,...5n are in contact with the third wall section 473, and extend towards the fourth wall section 474. Gaps through which water can flow are provided between the electrode plates and the inner face of the fourth wall section 474, so that turn-back sections T are formed as a result. The electrode plates 51, 53,..., 5(n-1) of the latter are in contact with the fourth wall section 474, and extend towards the third wall section 473. Gaps through which water can flow are provided between the electrode plates and the inner face of the third wall section 473, so that turn-back sections T are formed as a result. A meandering flow channel such as the one illustrated in Fig. 11A becomes formed as a result inside the container 47.

In the electrolysis device 41 having such a structure, the scale component in the water precipitates in the form of scale, by electrolysis, on the cathode of each electrode pair 49 that is made up of adjacent electrode plates, over the lapse of time until the water that has flowed through the water inlet port 43 into the container 47 flows out of the container 47 through the water outlet port 45. The scale deposited on the cathodes is caused to come off therefrom, for instance through periodic reversal of the polarity of the electrode plates, and to sediment on the third wall section 473 of the container 47.

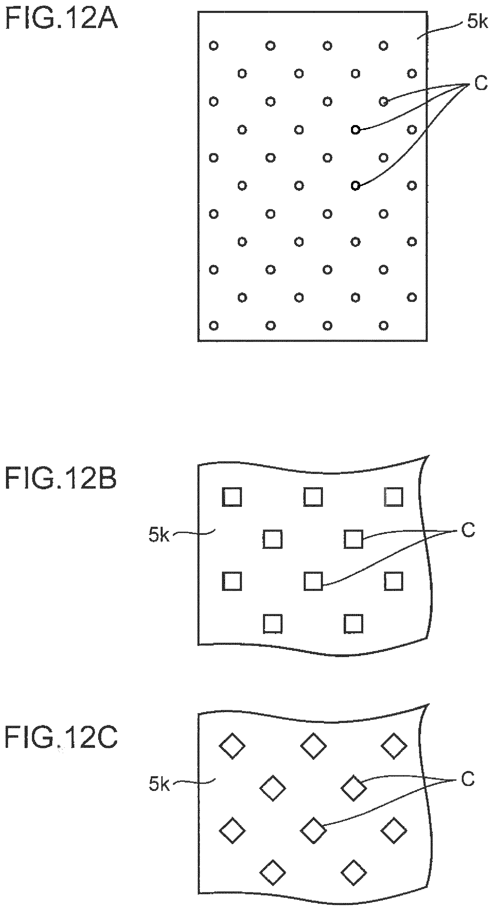

The electrode plates will be explained in further detail next with reference to Figs. 12A and 12B. Herein, Fig. 12A is a front-view diagram illustrating an electrode plate of the electrolysis device 41. The electrode plates have an inflow section as agitation means. The inflow section has a plurality of communicating sections C. The particulars are as follows.

As illustrated in Fig. 12A, for instance the electrode plate 5k has a plurality of communicating sections C. The communicating sections C are through-holes (water passage holes) that penetrate through the electrode plate 5k in the thickness direction thereof. The communicating sections C are not limited circular through-holes, and may have a square or rectangular shape, such as the one of Variation 1 illustrated in Fig. I2B, or may have a rhomboid shape such as the one of Variation 2 illustrated in Fig. 12C.

The communicating sections C are provided spaced apart from each other. Adjacent communicating sections C are provided spaced apart from each other in the first direction D1 or in a direction that intersects the first direction D1. In the present embodiment, the communicating sections C are provided, distributed at intervals from each other, substantially over the entirety of the electrode. The communicating sections C are provided at equal intervals substantially, over the entirety of the electrode plate 5k, but the embodiment is not limited thereto. For instance, the number and/or opening surface area of the communicating sections C in the electrode plate 5k, at an opposing region that opposes an adjacent electrode plate 5(k+1) in the thickness direction of the electrode plates, may be set to be greater than the number or opening surface area of the communicating sections C at a region other than that opposing region.

In the present embodiment, the number of the communicating sections C and the size of the communicating sections C are identical among the plurality of electrode plates 51 to 5n, but the embodiment is not limited thereto. For instance, the concentration of the scale component in water on the downstream side in the interior of the container 47 tends to be smaller than that on the upstream side, and hence the number of the communicating sections C in downstream electrode plates may be set to be greater than the number of the communicating sections C in upstream electrode plates. Also, the opening surface area of the communicating sections C in downstream electrode plates may be set to be larger than the opening surface area of the communicating sections C in upstream electrode plates.

The number, opening surface area and so forth of the plurality of communicating sections C provided in the electrode plate 5k are not particularly limited. Preferably, the total opening surface area of the plurality of communicating sections C provided in the electrode plate 5k is equal to or smaller than 5% of the surface area of one surface of the electrode plate 5k (surface area assuming that no communicating sections C are provided in the electrode plate 5k). As a result, it becomes possible to disturb the flow of water in the flow channel between electrode plates while curtailing decreases in the surface area of the electrode plates. Preferably, the total of the opening surface area of the communicating sections C ranges from 1 % to 3% of the surface area of the electrode plate 5k.

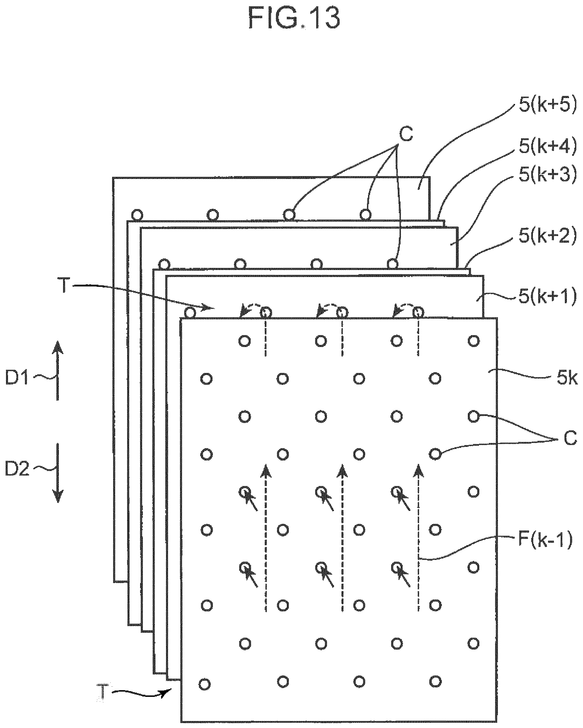

Fig. 13 is a perspective view diagram illustrating the arrangement of a plurality of electrode plates and flow of water inside the container 47, and Fig. 14 is a cross-sectional diagram illustrating the flow of water inside the container 47. As illustrated in Fig. 13 and Fig. 14, part of the water flowing through the flow channel F(k-1) in the first direction D1 (upwards) flows into the flow channel Fk via the communicating sections C provided in the electrode plate 5k, and becomes mixed with the main stream that flows through the flow channel Fk. The flow of water in the flow channel Fk is disturbed as a result. Similarly, part of the water flowing through the flow channel Fk in the second direction D2 (downwards) flows into the flow channel F(k+1) through the communicating sections C that are provided in the electrode plate 5(k+1), and becomes mixed with the main stream that flows through the flow channel F(k+1). The flow of water in the flow channel F(k+1) is disturbed as a result.

The operating conditions in the second embodiment at the time of electrolysis are identical to the operating conditions explained for the first embodiment, and will not be described again. As in the second embodiment, water flowing through the vicinity of the electrode plates does not mix readily with surrounding water in a case where the flow velocity of water flowing through the meandering flow channel within the container 47 is low, of about 6 to 13 mm/second. In such a case, water of low scale component concentration is prone to drift to the vicinity of those electrode plates that function as anodes, in conventional electrolysis devices in which the electrode plates do not have the plurality of communicating sections C. In the present embodiment, by contrast, it becomes possible to suppress drifting of water of low scale component concentration towards the vicinity of those electrode plates that function as anodes, even at such low velocity, and hence the precipitation reaction of the scale component between the electrode plates is accordingly promoted.

In the present embodiment, an instance has been exemplified wherein the plurality of electrode plates 51 to 5n forms a meandering flow channel that meanders in the vertical direction, inside the container 47, but the embodiment is not limited thereto. For instance, the plurality of electrode plates 51 to 5n may adopt a configuration such that the electrode plates 51 to 5n form a meandering flow channel that meanders in some other direction, for instance a horizontal direction, inside the container 47.

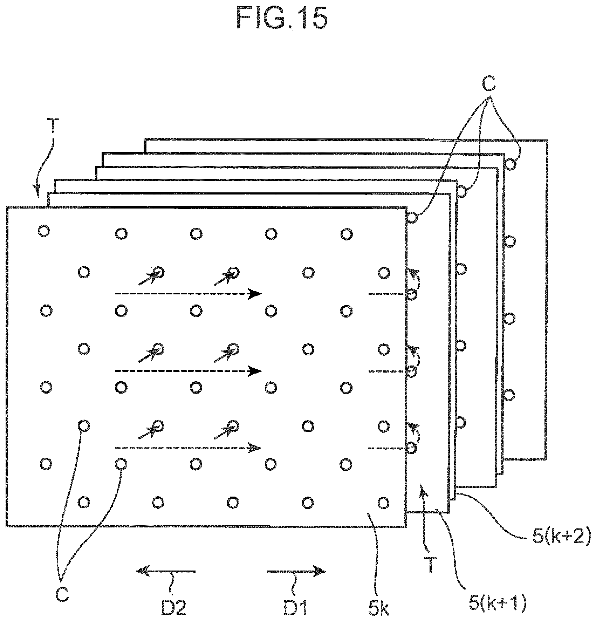

To form a meandering flow channel that meanders in the horizontal direction, for instance, it suffices to arrange the electrolysis device 41 illustrated in Figs. 11A and 11B in such a manner that the fifth wall section 475 is positioned on the lower side and the sixth wall section 476 is positioned on the upper side. In this case, part of the water that flows through the flow channel F(k-1) in the first direction D1 (rightwards) flows into the flow channel Fk through the communicating sections C provided in the electrode plate 5k, and merges with the main stream that flows through the flow channel Fk, as illustrated in Variation 3 of Fig. 15. The flow of water in the flow channel Fk is disturbed as a result. Similarly, part of the water flowing through the flow channel Fk in the second direction D2 (leftwards) flows into the flow channel F(k+1) through the communicating sections C that are provided in the electrode plate 5(k+1), and merges with the main stream that flows through the flow channel F(k+1). The flow of water in the flow channel F(k+1) is disturbed as a result.

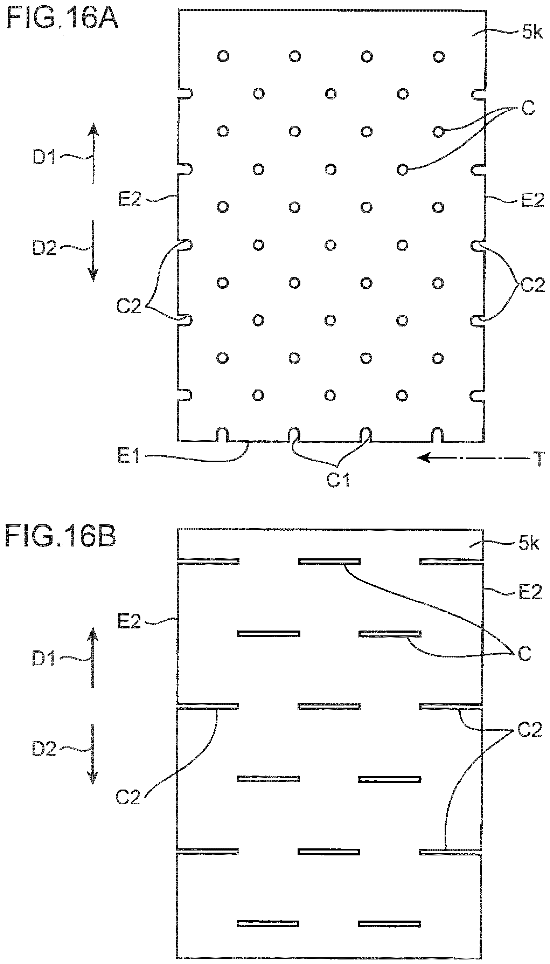

Fig. 16A is a front-view diagram illustrating an electrode plate in Variation 4 of the electrolysis device 41. In Variation 4, as illustrated in Fig. 16A, some of the communicating sections C1 from among the plurality of communicating sections C are provided at an edge E1, of the electrode plate 5k, adjacent to a turn-back section T. These communicating sections C1 are provided spaced apart from each other along the edge E1. These communicating sections C1 are not through-holes such that the periphery whereof is closed, as in the case of the other communicating sections C, but are, instead, through-sections such that part of the opening thereof is open at the edge E1.

In Variation 4, some communicating sections C2 from among the plurality of communicating sections C are provided at edges E2 on both sides of the electrode plate 5k. These communicating sections C2 are provided spaced apart from each other along the edges E2. Unlike the other communicating sections C, the communicating sections C1 are not through-holes having the periphery that is closed, but are through-sections having the opening that is partially opened at the edges E2. Electrode plates other than the electrode plate k may also have a configuration identical to that of the electrode plate k.

Fig. 16B is a front-view diagram illustrating an electrode plate in Variation 5 of the electrolysis device 41. In Variation 5, the electrode plate 5k has a plurality of slits (communicating sections) C. The slits C extend in a direction that intersects the direction of water flow D1 or D2. In this variation, the slits C extend in a direction that is perpendicular to the direction of water flow D1 or D2. Some slits C2 from among the plurality of slits C are opened at the edges E2 positioned at the sides. Electrode plates other than the electrode plate k may also have a configuration identical to that of the electrode plate k.

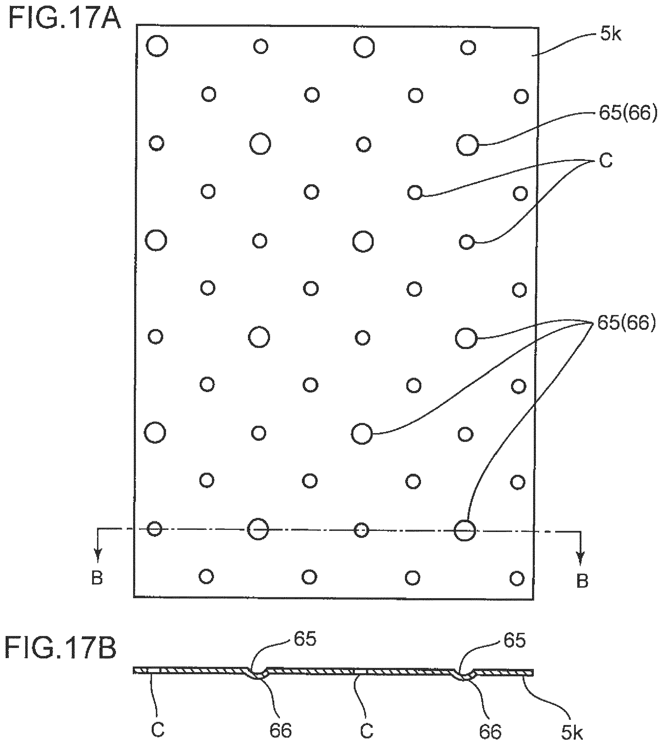

Fig. 17A is a front-view diagram illustrating an electrode plate in Variation 6 of the electrolysis device 41, and Fig. 17B is a cross-sectional diagram along line B-B of Fig. 17A. As illustrated in Figs. 17A and 17B, the electrode plates in Variation 6 have a plurality of projections 66 that protrude towards an adjacent electrode plate on one side in the thickness direction, and a plurality of recesses 65 that are recessed towards the side opposite to an adjacent electrode plate on the other side in the thickness direction.

In Variation 6, the plurality of recesses 65 and plurality of projections 66 are formed through working a sheet metal material in such a manner that one face of the metal sheet material is sunk, whereby the other face thereof bulges out. The plurality of recesses 65 and plurality of projections 66 formed on the electrode plates are formed at identical positions, but on mutually reverse faces, of the electrode plates. The shapes of the recesses 65 in Variation 6 are semispherical shapes that are recessed in the thickness direction of the electrodes, and the shapes of the projections 66 are semispherical shapes that protrude in the thickness direction of the electrodes, but may be other shapes, for instance columnar, or prismatic shapes.

The recesses 65 (projections 66) in the electrode plates are provided spaced apart from each other. In Variation 6, the plurality of recesses 65 (plurality of projections 66) is arrayed regularly, lengthwise and breadthwise, over the entire surface of the electrodes, but a respective density of the recesses 65 (projections 66) may be set for each given region in a case where, for instance, there are certain regions at which the agitation effect is to be focused to a greater degree than in other regions.

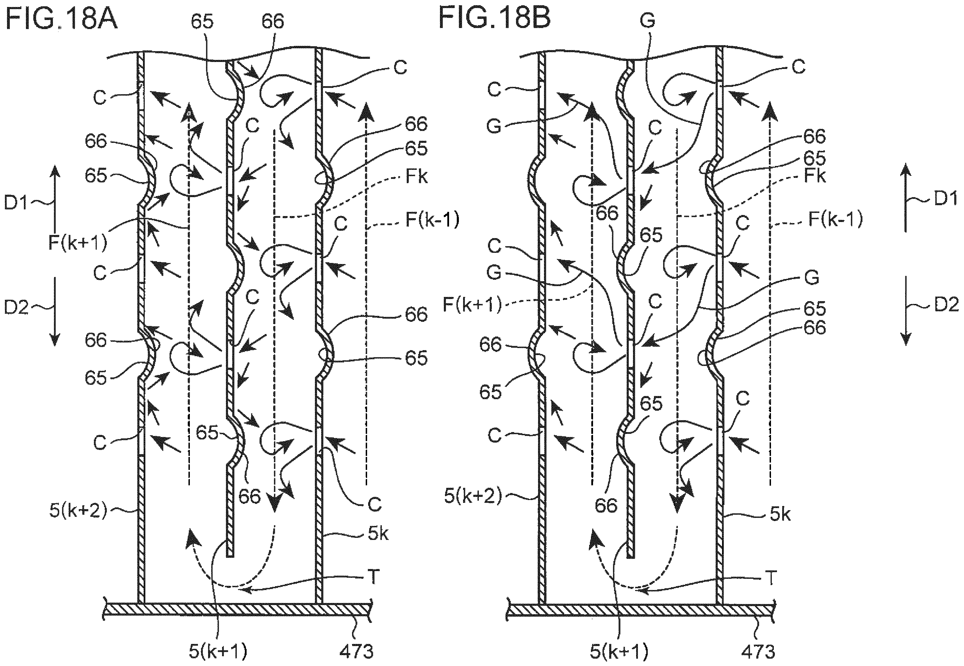

Fig. 18A is a cross-sectional diagram illustrating the flow of water inside the container 47 in Variation 6. As illustrated in Fig. 18A, the flow of water in the flow channels between adjacent electrode plates in Variation 6 is disturbed by the plurality of projections 66 and the plurality of recesses 65. As a result, it becomes possible to further suppress drifting of water of low scale component concentration towards the vicinity of those electrode plates that function as anodes, from among adjacent electrode plates, and hence the precipitation reaction of the scale component between the electrode plates is further promoted.

In Variation 6, for instance, some or all the projections 66 of the electrode plate 5(k+1) are provided at positions that oppose, in the thickness direction of the electrode plates, the communicating sections C that are provided in the electrode plate 5k, but the projections 66 may be offset to some extent with respect to the communicating sections C. The projections 66 protrude towards an electrode plate that is positioned upstream. In this case, the flow of water can be disturbed yet more effectively by virtue of a synergistic effect that combines the effect of disturbing the flow of water elicited by water that flows into the flow channel Fk via the communicating sections C that are provided in the electrode plate 5k, and the effect of disturbing the flow of water elicited by the projections 66 that are at positions opposing those of the communicating sections C.

The projections 66 may protrude towards an electrode plate that is positioned downstream, as in Variation 7 illustrated in Fig. 18B. In Variation 7, for instance at least some of the plurality of projections 66 in the electrode plate 5k are provided at a position at which the inflow of water into the flow channel F(k+1) via the communicating sections C is promoted. Specific examples of the position at which inflow of water to the flow channel F(k+1) via the communicating sections C is promoted include, for instance, positions of the projections 66 such that water that flows through the flow channel Fk is guided, by flowing along the projections 66, into the communicating sections C that are provided in the electrode plate 5(k+1), as denoted by arrows G in Fig. 18B.

In Variation 7, for instance, some or all the projections 66 of the electrode plate 5k are provided at positions that oppose, in the thickness direction of the electrode plates, the communicating sections C that are provided in the electrode plate 5(k+1), but the projections 66 may be offset to some extent with respect to the communicating sections C.

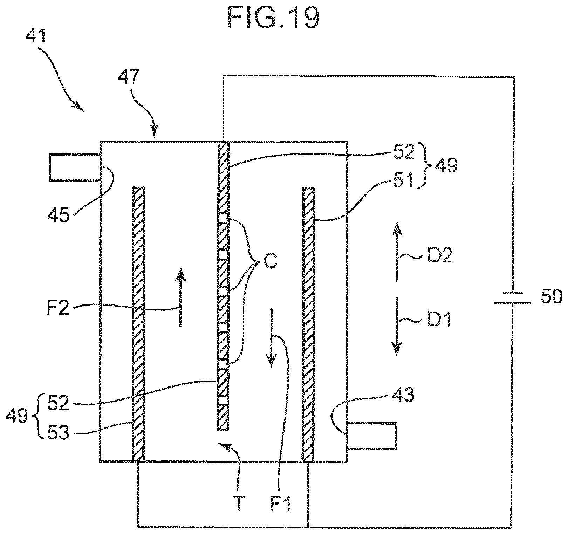

Fig. 19 is a cross-sectional diagram illustrating Variation 8 of the electrolysis device 41. In Variation 8, the electrolysis device 41 is provided with the container 47, the first electrode plate 51, the second electrode plate 52 and the third electrode plate 53 that are accommodated in the container 47, and with the power source 50. The first electrode plate 51, the second electrode plate 52 and the third electrode plate 53 are arrayed in this order, spaced apart from each other, in the thickness direction of the electrode plates. Inside the container 47 there are formed the first flow channel F1, being a gap between the first electrode plate 51 and the second electrode plate 52, and through which water flows in the first direction D1, the second flow channel F2, being a gap between the second electrode plate 52 and the third electrode plate 53, and through which water flows in a second direction D2 opposite the first direction D1, and the turn-back section T that connects the downstream end of the first flow channel F1 and the upstream end of the second flow channel F2. The second electrode plate 52 has the plurality of communicating sections C for causing part of the water flowing through the first flow channel F1 to flow into the second flow channel F2, upstream of the downstream end of the first flow channel F1. The communicating sections C are not provided in the first electrode plate 51 or the third electrode plate 53.

In the second embodiment and variations thereof, as explained above, the plurality of communicating sections C are provided in the electrode plates. Therefore, part of the water flowing through the first flow channel F1 flows into the second flow channel F2 via the plurality of communicating sections C, upstream of the downstream end of the first flow channel first flow channel F1. As a result, the inflowing water is mixed, at a plurality of sites, with water flowing through the second flow channel F2. Such mixing of water at a plurality of sites causes the flow of water through the second flow channel F2 to be effectively disturbed over a wide range. As a result, it becomes possible to effectively suppress drifting of water of low scale component concentration towards the vicinity of that electrode plate that functions as an anode, from among the second electrode plate 52 and the third electrode plate 53 that form the second flow channel F2, and hence the precipitation reaction of the scale component between the second electrode plate 52 and the third electrode plate 53 is accordingly promoted.

Further, the flow of water that flows in the vicinity of the communicating sections C is disturbed, also in the first flow channel F1, when part of the water that flows through the first flow channel F1 flows out of the first flow channel F1 via the plurality of communicating sections C, as described above. As a result, it becomes possible to effectively suppress drifting of water of low scale component concentration towards the vicinity of that electrode plate that functions as an anode, from among the first electrode plate 51 and the second electrode plate 52 that form the first flow channel F1, and hence the precipitation reaction of the scale component between the first electrode plate 51 and the second electrode plate 52 is accordingly promoted.

Such being the case, this configuration allows increasing the removal efficiency of scale component in water, even without increasing the surface area of the electrode plates by increasing the number of electrode plates. Therefore, it becomes possible to increase the removal efficiency of scale component while curtailing increases in cost derived from electrode materials.

In these configurations, as described above, the water that flows into the container 47 through the water inlet port 43 flows in the first direction D1, through the first flow channel F1, towards the turn-back section T; thereupon, the direction of flow is reversed at the turn-back section T, and thereafter the water flows through the second flow channel F2 in the second direction D2. Thus, pressure loss occurs when water flows through the first flow channel F1, the turn-back section T and the second flow channel F2 in this order, and, accordingly, the pressure in the second flow channel F2 becomes lower than the pressure in the first flow channel F1. As a result, water flows from the first flow channel F1 into the second flow channel F2 via the communicating sections C.

In the second embodiment and variations thereof, adjacent communicating sections C are provided spaced apart from each other, in the electrode plates, in the first direction D1 or in a direction that intersects the first direction D1. In this configuration, for instance, part of the water that flows through the first flow channel F1 in the first direction D1 flows into the second flow channel F2 via the plurality of communicating sections C that are provided, spaced apart from each other, in the first direction D1 or a direction that intersects the first direction D1. In the second flow channel F2, therefore, the flow of water is effectively disturbed over a wide range in the first direction D1 or a direction that intersects the first direction D1.

In the second embodiment and Variations I to 7, the plurality of communicating sections C is provided not only in the second electrode plate 52 but in other electrode plates as well, and hence mixing of water in the flow channels F1 to F(n-1) (disturbing of the flow of water) is further promoted.

In Variation 4, some of the plurality of communicating sections C are provided at the edge E1 of the of the electrode plates that are adjacent to the turn-back sections T. In this configuration, therefore, water flows into the downstream flow channel via the communicating sections C that are provided at the edge E1 of the electrode plates. Such water inflow disturbs the flow of water at the turn-back sections T, and the flow of water from each turn-back section T into the flow channel downstream thereof. Therefore, the water that flows from each turn-back section T into the flow channel downstream thereof exhibits a smaller difference between the scale component concentration at a region on the side of one electrode plate that makes up the flow channel and the scale component concentration at a region on the side of the other electrode plate. That is, there decreases the difference in concentration of scale component in the width direction of the flow channel. As a result, it becomes possible to further suppress drifting of water of low scale component concentration towards the one electrode plate and the other electrode plate in the flow channel.

In Variations 6 and 7, each of the electrode plates has the plurality of projections 66 that protrude towards an adjacent electrode plate, and the plurality of recesses 65 that are recessed towards a side opposite to an adjacent electrode plate. In this configuration, the flow of water in the flow channel between adjacent electrode plates is disturbed by the plurality of projections 66 and the plurality of recesses 65. As a result, it becomes possible to further suppress drifting of water of low scale component concentration towards the vicinity of that electrode plate that functions as an anode, from among the adjacent electrode plates. Therefore, the precipitation reaction of scale component between electrode plates is further promoted.

In Variation 7, the projections 66 protrude towards the electrode plates that are positioned downstream. In Variation 7, at least some of the plurality of projections 66 in the electrode plate 5k are provided at positions at which there is promoted inflow of water into the flow channel F(k+1) via the communicating sections C. In this configuration, inflow of water to flow channel F(k+1) via the communicating sections C is promoted by the projections 66, and hence the effect of disturbing the flow of water at the flow channel F(k+1) is further increased.

In Variation 5, the plurality of communicating sections C has a plurality of slits. In this configuration, the amount of water that flows into the flow channel F2 via the communicating sections C can be adjusted by adjusting the size of the slits in the longitudinal direction thereof.

In Variation 5, the slits extend in a direction that intersects the direction of water flow. In this configuration, water can be caused to flow into the flow channel, in the direction that intersects the direction of water flow, over a wider range than in the case where the longitudinal direction of the slits extends in a direction parallel to the direction of water flow.

### (Third embodiment - according to the present invention)

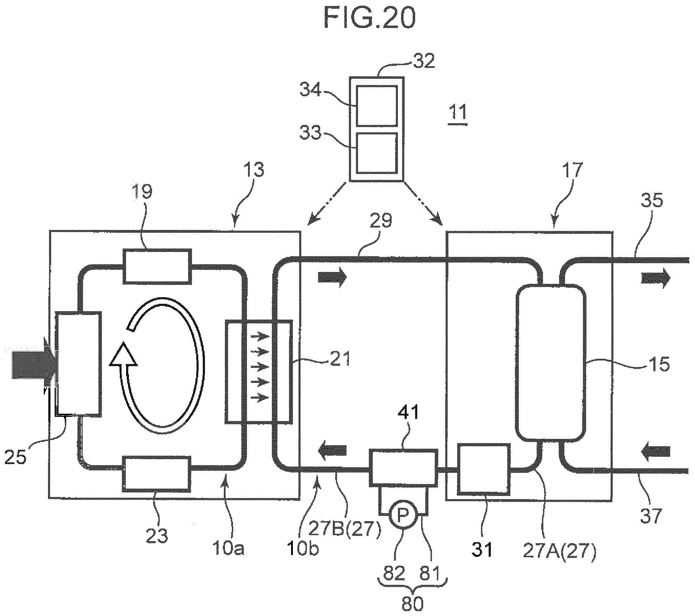

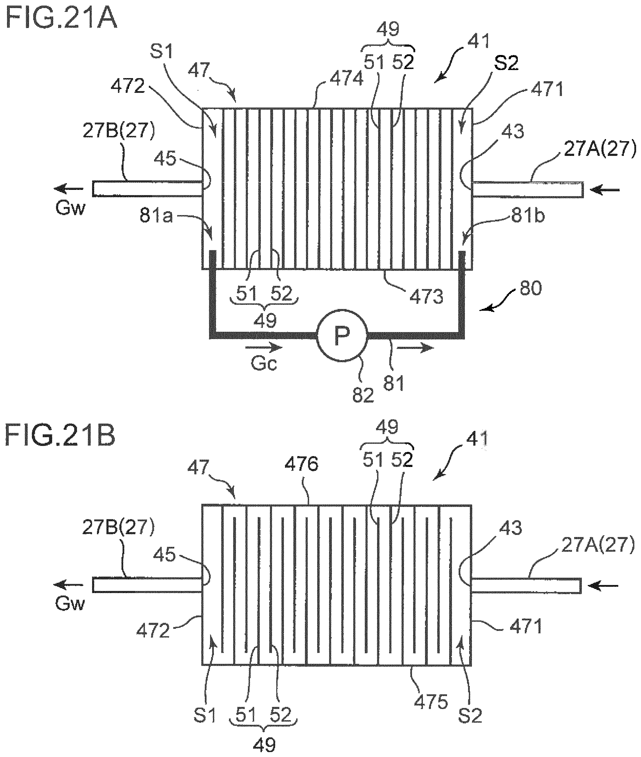

The electrolysis device 41 according to the third embodiment differs from those of the first embodiment and the second embodiment in that now the electrolysis device 41 is further provided with a circulation mechanism 80 as agitation means, as illustrated in Fig. 20. Herein, Figs. 21A and 21B are cross-sectional diagrams illustrating the electrolysis device 41 according to the third embodiment. Fig. 21A is a cross-sectional diagram of the electrolysis device 41 illustrated in Fig. 2 cut along a plane parallel to the vertical direction, wherein the cross-section of the electrolysis device 41 is depicted as a side view. Fig. 21B is a cross-sectional diagram of the electrolysis device 41 illustrated in Fig. 2 cut along a plane parallel to the horizontal direction, wherein the cross-section of the electrolysis device 41 is depicted as a plane view.

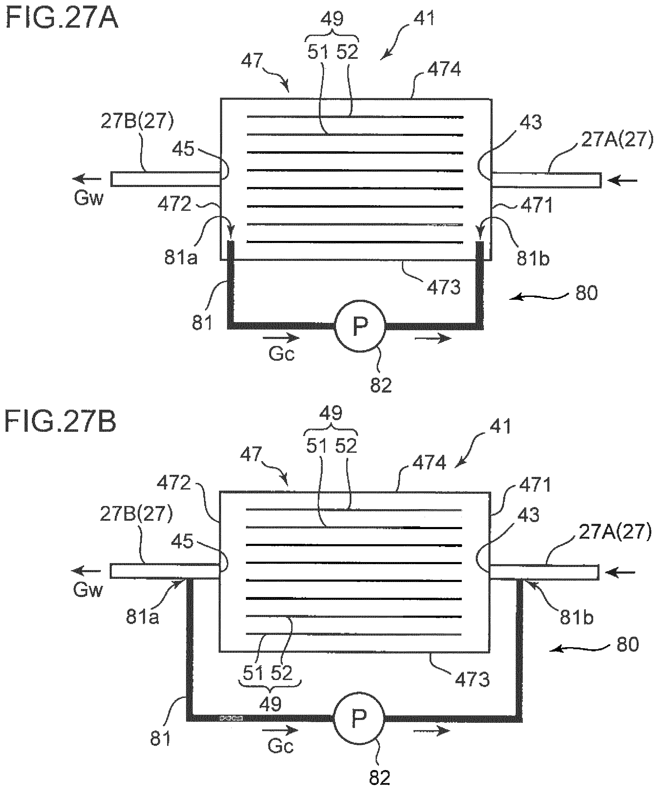

As illustrated in Figs. 21A and 21B, the electrolysis device 41 has a container 47 and a plurality of electrodes 51, 52 provided inside the container 47. As illustrated in Fig. 21B, a water flow channel is formed by the plurality of electrodes 51, 52, inside the container 47. In the present embodiment, the water flow channel is a single meandering flow channel formed by the plurality of electrodes 51, 52, but is not limited thereto. The water flow channel may be a flow channel that is not a meandering flow channel, for instance as in the below-described Variation 15 illustrated in Figs. 27A and 27B. The meandering flow channel in the present embodiment meanders in the horizontal direction, as illustrated in Fig. 21B, but is not limited thereto. The meandering flow channel may, for instance, meander in the vertical direction.

In the present embodiment, the container 47 has a substantially rectangular parallelepiped shape, but is not limited thereto. A water flow space through which water flows is provided inside the container 47. The container 47 has a first wall section 471 and a second wall section 472 opposing each other. The container 47 has side wall sections that join the first wall section 471 and the second wall section 472. In the present embodiment, the side wall section include, although not limited thereto, a third wall section 473 that makes up a lower wall, a fourth wall section 474 that makes up an upper wall, a fifth wall section 475 that makes up a left wall, and a sixth wall section 476 that makes up a right wall.

The container 47 has a water inlet port 43 and a water outlet port 45. The water inlet port 43 of the container 47 is provided in the first wall section 471, and the water outlet port 45 is provided in the second wall section 472, but the embodiment is not limited thereto. One or both of the water inlet port 43 and the water outlet port 45 may be provided at the side wall sections above. The water inlet pipe 27 positioned on the side of the tank 15 illustrated in Fig. 20 (upstream main pathway 27A) is connected to the water inlet port 43, while the water inlet pipe 27 positioned on the side of the water heat exchanger 21 illustrated in Fig. 20 (downstream main pathway 27B) is connected to the water outlet port 45.

The plurality of electrodes 51, 52 comprises a plurality of first electrodes 51 and a plurality of second electrodes 52. The plurality of first electrodes 51 and the plurality of second electrodes 52 are arrayed in one direction (thickness direction of the electrodes) in such a manner that the first electrodes 51 and the second electrodes 52 are disposed alternately. In the present embodiment, the plurality of first electrodes 51 extends from the third wall section 473 towards the fourth wall section 474, as illustrated in Fig. 21B, and the plurality of second electrodes 52 extends from the fourth wall section 474 towards the third wall section 473. In the present embodiment, the electrodes are disposed at an attitude parallel to the first wall section 471, but the embodiment is not limited thereto.

Herein adjacent electrodes 51, 52 make up a respective electrode pair 49. The plurality of electrodes 51, 52 is connected to a power source, not shown, in such a manner that one electrode of each electrode pair 49 functions as an anode and the other electrode functions as a cathode. Herein, a DC power source is used for instance as the power source. In the present embodiment, the plurality of first electrodes 51 and the plurality of second electrodes 52 are connected in parallel to the power source but the embodiment is not limited thereto.

The same material exemplified in the first embodiment can be used as the material that makes up the electrode plates.

The electrodes may adopt various shapes, for instance a plate shape or rod shape, but a flat plate shape is resorted to in the present embodiment. The surface area of the electrodes can be made greater as a result. The plurality of first electrodes 51 and the plurality of second electrodes 52 in the present embodiment are disposed at mutually parallel attitudes, and are arrayed spaced apart from each other in the thickness direction of the electrodes. The gaps between electrodes function as flow channel through which water flows. In the present embodiment, the plurality of first electrodes 51 and the plurality of second electrodes 52 are disposed in such a manner that a meandering flow channel is formed, inside the container 47, through which water flows while meandering.

Voltage is applied to the electrode pairs 49 of the electrolysis device 41 during the heat-up operation of heating the water in the tank 15. Examples of electrolysis conditions in the electrolysis device 41 include for instance, although not limited thereto, a condition whereby current of a preset current value flows in the electrode pairs 49, a condition whereby a preset voltage is applied to the electrode pairs 49, or a condition that combines the foregoing conditions.

During the heat-up operation, the scale component comprised in water precipitates as scale, on the cathode of the electrode pairs 49, over the lapse of time until the water that has flowed into the container 47 through one from among the water inlet port 43 and the water outlet port 45 flows out of the container 47 through the other from among the water inlet port 43 and the water outlet port 45. As a result, it becomes possible to feed, to the water heat exchanger 21, water having had the scale component concentration thereof lowered in the electrolysis device 41.

The circulation mechanism 80 has the function of returning, to the upstream side, water inside the container 47. The circulation mechanism 80 comprises a circulation path (circulation pipe) 81 and a circulation pump (water pump) 82 that causes water to flow through the circulation path 81.

The circulation path 81 has a first end (circulating water inlet port end) 81a and a second end (circulating water outlet port end) 81b. The circulation pump 82 is provided at the circulation path 81.

In the present invention, as illustrated in Fig. 21A, the first end 81a and the second end 81b of the circulation path 81 are both connected to the container 47 of the electrolysis device 41. The second end 81b is positioned upstream of the site of connecting the first end 81a to the container 47.

Specifically, the first end 81a is positioned closer to the second wall section 472 than the electrode that is furthest downstream. The second end 81b is positioned closer to the first wall section 471 than the electrode that is furthest upstream. The first end 81a and the second end 81b are not disposed in the water flow channel between the electrodes 51, 52, but at a region other than the water flow channel between the electrodes 51, 52.

In the present invention, as illustrated in Fig. 21A, the first end 81a and the second end 81b are positioned inside the container 47, but the embodiment is not limited thereto. One or both of the first end 81a and the second end 81b may be for instance connected to a joint, not shown, that protrudes outward from a wall section of the container 47, in which case one or both of the first end 81a and the second end 81b are positioned outside the container 47. This feature applies also to the below-described variations.

A space S1 is provided between the electrode furthest downstream and the wall section that opposes this electrode (second wall section 472 in the present embodiment). The first end 81a is connected to the wall section (third wall section 473 in the present embodiment) that delimits the space S1. Water in the space S1 flows into the circulation path 81 via the first end 81a. A space S2 is provided between the electrode furthest upstream and the wall section that opposes this electrode (first wall section 471 in the present embodiment). The second end 81b is connected to the wall section (third wall section 473 in the present embodiment) that delimits the space S2. Circulating water that flows through the circulation path 81 flows into the space S2 via the second end 81b.

The first end 81a may be connected to the second wall section 472, the fourth wall section 474, the fifth wall section 475 or the sixth wall section 476, and the second end 81b may be connected to the first wall section 471, the fourth wall section 474, the fifth wall section 475 or the sixth wall section 476.

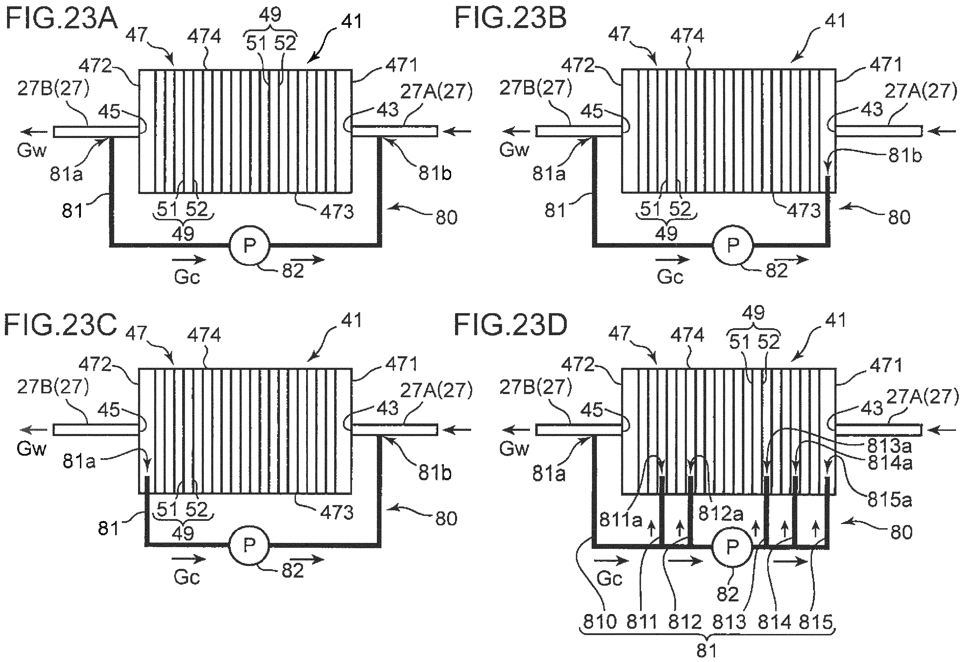

The circulation mechanism 80 is controlled by the control unit 33. The control unit 33 controls the circulation pump 82 of the circulation mechanism 80 in such a manner that a circulation flow rate Gc of return upstream is greater than a main stream flow rate Gw of feeding to the water heat exchanger 21. The main stream flow rate Gw is the flow rate of water flowing through the downstream main pathway 27B. In a case where the first end 81a of the circulation path 81 is connected to the downstream main pathway 27B, the main stream flow rate Gw is the flow rate of water flowing through the downstream main pathway 27B, downstream of the connection site of the first end 81a. The circulation flow rate Gc is the flow rate of water flowing through the circulation path 81. In a case where the circulation path 81 is branched, as in the below-described Variation 7 illustrated in Fig. 23D, the circulation flow rate Gc is the flow rate of water flowing through the circulation path 81 before branching (upstream circulation path 810 illustrated in Fig. 23D).

The control unit 33 controls the circulation pump 82 to adjust thereby the circulation flow rate Gc so as to lie within a predetermined range. The scaling factor of the circulation flow rate Gc with respect to the main stream flow rate Gw is not particularly limited. In terms of enhancing the efficiency of agitation of water flowing through the water flow channel (the meandering flow channel in the present embodiment) inside the container 47, the circulation flow rate Gc is preferably five times or more the main stream flow rate Gw, and more preferably 10 times or more the main stream flow rate Gw. The underlying reason for setting a larger circulation flow rate Gc will be explained next.

When electrolysis is performed in the water flow channel between electrodes, scale precipitates at cathode-side regions, and the concentration of scale component of water on the cathode sides drops accordingly. Therefore, the scale component concentration at cathode-side regions is lower than the scale component concentration at anode-side regions. In heat pump hot-water supply apparatuses, the amount of water that is heated in the water heat exchanger (amount of water fed to the water heat exchanger) and the amount of water that undergoes electrolysis in the electrolysis device are ordinarily identical. Accordingly, the velocity of water flowing through the water flow channel between electrodes in conventional electrolysis devices is low, and the water flowing through the water flow channel exhibits laminar flow.

In a specific example, the flow rate of water flowing through the container of the electrolysis device is a low flow rate, for instance of about 1 L/min. The velocity of water flowing through the water flow channel between electrodes is for instance of about 10 mm/s, in which case the Reynolds number ranges from about 100 to 200.

The scale component concentration at the above-described cathode-side regions is therefore kept low, regardless of the presence of water of comparatively high scale component concentration at anode-side regions. As a result, precipitation of scale is slowed down, and the removal efficiency of scale component (electrolysis efficiency) decreases.

In the present embodiment, therefore, the flow velocity of water flowing through the water flow channel between the electrodes 51, 52 is raised by increasing the circulation flow rate Gc to be greater than the main stream flow rate Gw. As a result, water is agitated in the water flow channel, and there decreases the difference between the scale component concentration at cathode-side regions and the scale component concentration at anode-side regions. The scale component concentration at cathode-side regions becomes as a result higher than that before agitation, and removal efficiency of scale component is therefore increased.

In the present embodiment, the scaling factor of the circulation flow rate Gc with respect to the main stream flow rate Gw is increased, to enable thereby the velocity of water flowing the water flow channel between the electrodes 51, 52 to increase 6-fold or more, and further, to increase 11-fold or more, as given in Table 1 of the below-described working examples. A performance ratio increases through disturbing of the flow on account of increased water velocity. Further, flow can be made into turbulent flow by increasing the scaling factor of the circulation flow rate Gc with respect to the main stream flow rate Gw.

Variations 1 to 13 of the electrolysis device 41 and the circulation mechanism 80 will be explained next. In the variations below, for instance the sites at which the circulation path 81 of the circulation mechanism 80 are connected are different from those of the embodiment illustrated in Fig. 21A. Other features, control of the circulation flow rate and so on are identical to those of the embodiment illustrated in Fig. 21A, and hence will not be explained in detail again.

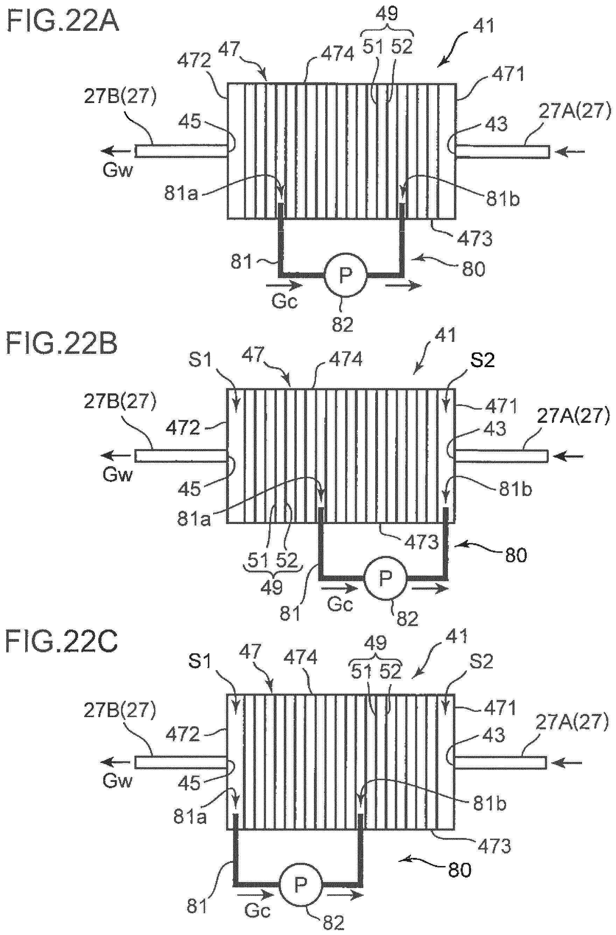

Fig. 22A is a cross-sectional diagram illustrating Variation 1 (not part of the invention) of the electrolysis device 41 and the circulation mechanism 80. In Variation 1, the first end 81a is provided at a position that allows water flowing through the water flow channel between the electrodes 51, 52 to be sucked into the circulation path 81. The second end 81b is provided at a position that allows water to be supplied into the water flow channel between electrodes 51, 52 that lie upstream of the water flow channel.

In Variation 1, specifically, the first end 81a is disposed between given electrodes 51, 52 inside the container 47, and the second end 81b is disposed between electrodes 51, 52 lying further upstream, but the embodiment is not limited thereto. One or both of the first end 81a and the second end 81b may be for instance connected to a joint, not shown, that protrudes outward from a wall section of the container 47, in which case one or both of the first end 81a and the second end 81b may be positioned outside the container 47.

In Variation 1, the flow velocity of water can be selectively increased at the water flow channel (circulation section) between the site at which the first end 81a is provided and the site at which the second end 81b is provided, in the water flow channel inside the container 47. In a case where, for instance, the electrolysis efficiency at the downstream region of the water flow channel is to be increased, the first end 81a and the second end 81b are disposed in such a manner that the circulation section is provided at a position displaced towards the downstream side, rather than to the center of the water flow channel (center of the entire length of the water flow channel).

Fig. 22B is a cross-sectional diagram illustrating Variation 2 (not part of the invention) of the electrolysis device 41 and the circulation mechanism 80. In Variation 2, the first end 81a is provided at a position that allows flowing in the water flow channel between the electrodes 51, 52 to be sucked into the circulation path 81. By contrast, the second end 81b is provided at a position that allows water to be supplied to the space S2 between the electrode furthest upstream, and the wall section opposing this electrode (first wall section 471 in Variation 2).

In Variation 2, specifically, the first end 81a is disposed between given electrodes 51, 52 inside the container 47, but the embodiment is not limited thereto. The first end 81a may be for instance connected to a joint, not shown, that protrudes outward from a wall section of the container 47, in which case the first end 81a is positioned outside the container 47. The second end 81b is connected to the wall section (third wall section 473 in Variation 2) that delimits the space S2. In Fig. 22B, the second end 81b is disposed inside the space S2, but is not limited thereto. The second end 81b may be for instance connected to a joint, not shown, that protrudes outward from a wall section of the container 47, in which case the second end 81b is positioned outside the container 47. The feature wherein the first end 81a and the second end 81b may be arranged inside or outside the container 47 applies also to the below-described variations.

In Variation 2, the flow velocity of water can be selectively increased at the water flow channel (upstream water flow channel) between the site at which the first end 81a is provided and the site at which the second end 81b is provided, in the water flow channel inside the container 47.

Fig. 22C is a cross-sectional diagram illustrating Variation 3 (not part of the invention) of the electrolysis device 41 and the circulation mechanism 80. In Variation 3, the first end 81a is provided at a position that allows water flowing through the space S1 between the electrode furthest downstream and the wall section opposing this electrode (second wall section 472 in Variation 3) to be sucked into the circulation path 81. Meanwhile, the second end 81b is provided at a position that allows water to be supplied to the water flow channel between the electrodes 51, 52.

In Variation 3, the flow velocity of water can be selectively increased at the water flow channel (downstream flow channel) between the site at which the first end 81a is provided and the site at which the second end 81b is provided, in the water flow channel inside the container 47.

Fig. 23A is a cross-sectional diagram illustrating Variation 4 (not part of the invention) of the electrolysis device 41 and the circulation mechanism 80. In Variation 4, the first end 81a of the circulation path 81 is connected to the downstream main pathway 27B, and the second end 81b is connected to the upstream main pathway 27A.

Fig. 23B is a cross-sectional diagram illustrating Variation 5 (not part of the invention) of the electrolysis device 41 and the circulation mechanism 80. In Variation 5, the first end 81a of the circulation path 81 is connected to the downstream main pathway 27B, and the second end 81b is connected to the container 47. Specifically, the second end 81b may be provided at a position that allows supplying water to the space S2 between the electrode furthest upstream, and the wall section opposing this electrode (first wall section 471 in Variation 5), but the embodiment is not limited thereto. The second end 81b is provided at a position that allows water to be supplied to the water flow channel between the electrodes 51, 52.

Fig. 23C is a cross-sectional diagram illustrating Variation 6 (not part of the invention) of the electrolysis device 41 and the circulation mechanism 80. In Variation 6, the first end 81a of the circulation path 81 is connected to the container 47, and the second end 81b is connected to the upstream main pathway 27A. Specifically, the first end 81a is provided at a position that allows water flowing through the space S1 between the electrode furthest downstream and the wall section opposing this electrode (second wall section 472 in Variation 6) to be sucked into the circulation path 81, but the embodiment is not limited thereto. The first end 81a may be provided at a position that allows water to be supplied to the water flow channel between the electrodes 51, 52.

Fig. 23D is a cross-sectional diagram illustrating Variation 7 (not part of the invention) of the electrolysis device 41 and the circulation mechanism 80. In Variation 7, the circulation path 81 has an upstream circulation path 810 that includes the first end 81a, and a plurality of branch paths 811 to 815 that branch from the upstream circulation path 810. The first end 81a is connected to the downstream main pathway 27B. The ends of the branch paths 811 to 815 are connected to the container 47. An end 811a of the branch path 811 is positioned furthest downstream, while an end 811a of the branch path 815 is positioned furthest upstream. The first end 81a may be connected to the container 47.

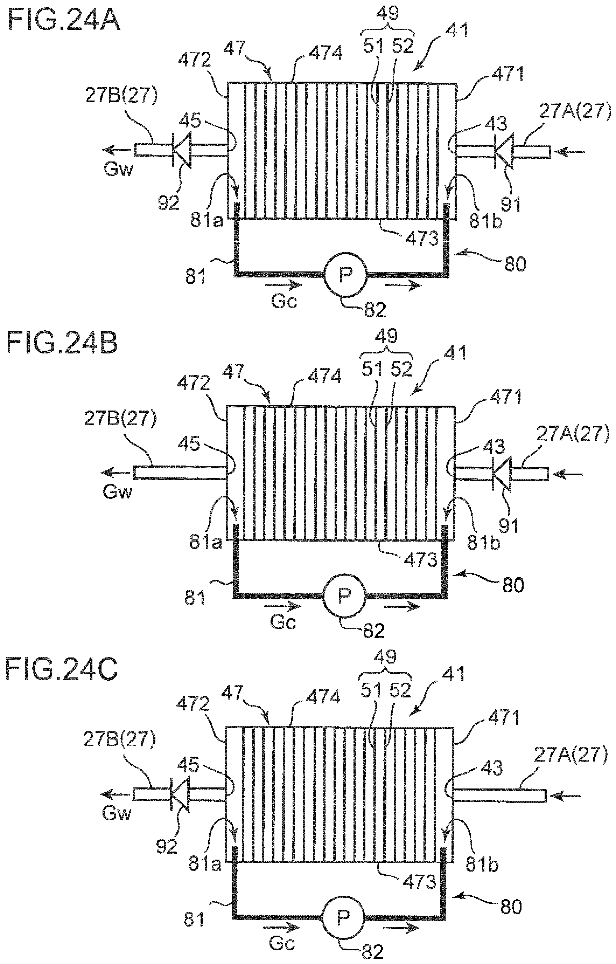

Fig. 24A is a cross-sectional diagram illustrating Variation 8 of the electrolysis device 41 and the circulation mechanism 80, Fig. 24B is a cross-sectional diagram illustrating Variation 9 of the electrolysis device 41 and the circulation mechanism 80, and Fig. 24C is a cross-sectional diagram illustrating Variation 10 of the electrolysis device 41 and the circulation mechanism 80.

In Variations 8, 9 and 10, a valve is provided at any one, or both, of an inlet side and outlet side of the container 47 of the electrolysis device 41. In Variation 8, specifically, a check valve 91 is provided in the upstream main pathway 27A, and a check valve 92 is provided in the downstream main pathway 27B. In Variation 9, the check valve 91 is provided in the upstream main pathway 27A alone, while in Variation 10, the check valve 92 is provided in the downstream main pathway 27B alone. Check valves are thus provided in Variations 8, 9 and 10, and hence it becomes possible to prevent backflow in the upstream main pathway 27A and the downstream main pathway 27B.

The first end 81a and the second end 81b in Variations 8, 9 and 10 are connected to the container 47 of the electrolysis device 41.

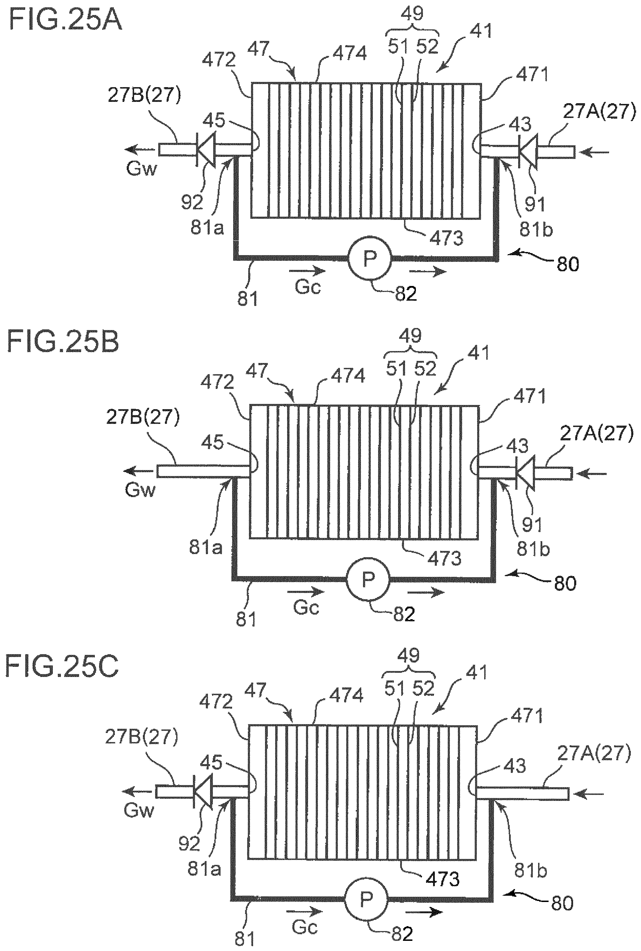

Fig. 25A is a cross-sectional diagram illustrating Variation 11 of the electrolysis device 41 and the circulation mechanism 80, Fig. 25B is a cross-sectional diagram illustrating Variation 12 of the electrolysis device 41 and the circulation mechanism 80, and Fig. 25C is a cross-sectional diagram illustrating Variation 13 of the electrolysis device 41 and the circulation mechanism 80. Variations 11-13 are not part of the invention.

In Variations 11, 12 and 13, valves are provided in the same way as in Variations 8, 9 and 10, except that herein the first end 81a is connected to the downstream main pathway 27B and the second end 81b is connected to the upstream main pathway 27A.

In Variation 11, specifically, the check valve 91 is provided in the upstream main pathway 27A, and the check valve 92 is provided in the downstream main pathway 27B. The check valve 91 is provided upstream of the second end 81b, and the check valve 92 is provided downstream of the first end 81a. In Variation 12, the check valve 91 is provided in the upstream main pathway 27A alone. The check valve 91 is provided upstream of the second end 81b. In Variation 13, the check valve 92 is provided in the downstream main pathway 27B alone. The check valve 92 is provided downstream of the first end 81a. Check valves are thus provided in Variations 11, 12 and 13, and hence it becomes possible to prevent backflow in the upstream main pathway 27A and the downstream main pathway 27B.

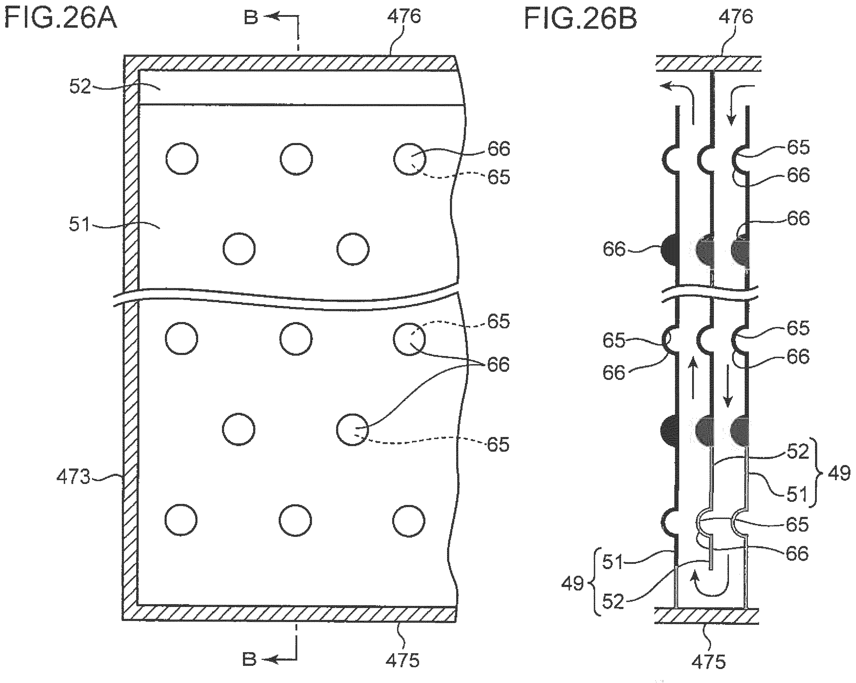

Fig. 26A is a side-view diagram illustrating Variation 14 (not part of the invention) of the electrolysis device 41, and Fig. 26B is a cross-sectional diagram of the electrolysis device 41 of Variation 14 (cross-sectional diagram along line B-B in Fig. 26A). In Variation 14 illustrated in Figs. 26A and 26B, the water flow channel inside the container 47 is a meandering flow channel such as that illustrated in Figs. 21A and 21B, but the water flow channel is not limited thereto, and need not be a meandering flow channel.

In Variation 14, at least either the plurality of recesses 65 or the plurality of projections 66 are provided in one or both electrodes of the electrode pairs 49. The recesses 65 and the projections 66 may be provided at just some of the electrode pairs 49, from among the plurality of electrode pairs 49. Variation 14 shown in Fig. 26B illustrates an instance where the plurality of recesses 65 and the plurality of projections 66 are provided in the electrodes.

In Variation 14, as illustrated in Figs. 26A and 26B, the plurality of recesses 65 and plurality of projections 66 in the electrodes are formed through working of a metal sheet material (for instance, a flat metal thin sheet), not shown, for instance by pressing in such a manner that one face of a metal sheet material is sunk, whereby the other face thereof bulges out, but the variation is not limited thereto. The electrodes thus formed have the plurality of recesses 65 formed on one face thereof, and the plurality of projections 66 of on the other face. The recesses 65 and the projections 66 are formed at identical positions, but on mutually reverse faces, of the electrode plates.

In the present embodiment, the shape of the recesses 65 may be a semispherical shape that is recessed in the thickness direction in the electrodes, and the shapes of the projections 66 may be semispherical shapes that protrude in the thickness direction of the electrodes, but may be other shapes, for instance columnar, or prismatic shapes.

In Figs. 26A and 26B, both the recesses 65 and the projections 66 are provided in one given electrode, but the embodiment is not limited thereto, and it is possible for one type from among the recesses 65 and the projections 66 to be provided in one electrode.

In Variation 14, water that flows through the water flow channel between adjacent electrodes 51, 52 is agitated by at least one type from among the plurality of recesses 65 and the plurality of projections 66. As a result, there decreases the difference between the scale component concentration at cathode-side regions and the scale component concentration at anode-side regions. The scale component concentration at cathode-side regions becomes as a result higher than that before agitation, and removal efficiency of scale component is therefore increased.

Fig. 27A is a cross-sectional diagram illustrating Variation 15 (not part of the invention) of the electrolysis device 41. In Variation 15, the water flow channel inside the container 47 of the electrolysis device 41 is not a meandering flow channel, as in the embodiment illustrated in Figs. 21A and 21B. The water flow channel in Variation 15 is made up of a plurality of flow channels that extends along the side walls of the container 47 (wall sections 473, 474 in Fig. 27A). The plurality of flow channels in Fig. 27A is substantially parallel to the side walls of the container 47, but is not limited thereto, and may be inclined with respect to the side walls. The plurality of flow channels are each formed by adjacent electrodes 51, 52.

The circulation path 81 of the circulation mechanism 80 may be connected to the container 47, as illustrated in Fig. 27A, Alternatively, the first end 81a of the circulation path 81 may be connected to the downstream main pathway 27B, and the second end 81b may be connected to the upstream main pathway 27A, as illustrated in Fig. 27B.

In the third embodiment, the plurality of electrodes 51, 52 may be flat plates having no through-holes, recesses or protrusions, but are not limited thereto. The agitation means in the third embodiment may comprise not only the circulation mechanism 80, but additionally, also the inflow section of the second embodiment. That is, at least some of the electrodes 51, 52 in third embodiment may be electrodes having the features of the second embodiment. Specifically, at least some of the electrodes in the third embodiment may have, for instance, the communicating sections C, the recesses 65, projections 66 and so forth illustrated in Figs. 12 to 18. In this case, in the electrolysis device 41 a synergistic effect is obtained that combines the agitation effect elicited by the circulation mechanism 80 of the third embodiment, and the agitation effect elicited by the inflow section of the second embodiment.

The agitation means in the third embodiment may comprise not only the circulation mechanism 80, but additionally also the agitation unit 60 of the first embodiment. Specifically, the electrolysis device 41 in the third embodiment may comprise for instance an agitation unit 60 such as the one illustrated in Figs. 4 to 11. In this case, in the electrolysis device 41 a synergistic effect is obtained that combines the agitation effect elicited by the circulation mechanism 80 of the third embodiment, and the agitation effect elicited by the agitation unit 60 of the first embodiment.

Table 1 is a set of data that illustrates the enhancing effect on electrolysis efficiency that is achieved by increasing the scaling factor of the circulation flow rate Gc with respect to the main stream flow rate Gw. In Table 1, electrolysis efficiency values are compared in the form of performance ratios. The performance ratio is a value denoting the multiple of electrolysis efficiency in a working example with respect to electrolysis efficiency in a comparative example, taking the electrolysis efficiency in the comparative example as 1.

Electrolysis efficiency in Examples 1 to 4 was evaluated under the conditions given in Table 1, using the heat pump hot-water supply apparatus 11 provided with the electrolysis device 41 and the circulation mechanism 80 illustrated in Figs. 21A and 21B. In Examples 3 and 4, electrolysis efficiency was evaluated under conditions for both an instance where there was used the electrolysis device 41 provided with the electrodes having the communicating sections C illustrated in Fig. 12A, and an instance where there was used the electrolysis device 41 having the columnar agitation members 61 illustrated in Figs. 4A and 4B. An electrolysis device 41 provided with no communicating sections C in the electrodes, and provided with no agitation members 61, was used in Examples 1 and 2.

In the comparative example and the reference example, electrolysis efficiency was evaluated under the conditions given in Table 1, using a heat pump hot-water supply apparatus provided with no circulation mechanism. In the reference example, electrolysis efficiency was evaluated under conditions for both an instance where there was used the electrolysis device 41 provided with the electrodes having the communicating sections C illustrated in Fig. 12A, and an instance where there was used the electrolysis device 41 having the columnar agitation members 61 illustrated in Figs. 4A and 4B. The evaluation results are given in Table 1.

**Table 1**

| | Comparative example | Reference example | Example 1 | Example 2 | Example 3 | Example 4 |
|---|---|---|---|---|---|---|
| Main stream flow rate Gw (L/min) | 1.0 | 1.0 | 1.0 | 1.0 | 1.0 | 1.0 |
| Circulation flow rate Gc (L/min) | 0 | 0 | 5 | 10 | 10 | 20 |
| Flow velocity between electrodes (mm/s) | 10 | 10 | 60 | 110 | 110 | 210 |
| Reynolds number | 160 | 160 | 1000 | 1800 | 1800 | 3500 |
| Agitation unit for agitation of water flow channel between electrodes | None | Water passage holes or columnar agitation members | None | None | Water passage holes or columnar agitation members | Water passage holes or columnar agitation members |
| Performance ratio | 1.0 | 1.3 | 1.1 | 1.4 | 1.6 | 1.8 |

As Table 1 shows, the electrolysis efficiency in Examples 1 to 4, where the multiple of the circulation flow rate Gc with respect to the main stream flow rate Gw is 5 or more, exhibits increased electrolysis efficiency with respect to the comparative example. In Examples 1 to 4, the flow velocity of water in the water flow channel between the electrodes 51, 52 has a magnitude that is 6 times or more that of the comparative example.

Electrolysis efficiency increases significantly in Examples 2 to 4, where the multiple of the circulation flow rate Gc with respect to the main stream flow rate Gw is 10 or greater.

The electrolysis efficiency in Example 3, further provided with an agitation unit for agitation in the water flow channel, exhibits a yet more significant increase in electrolysis efficiency as compared with Example 2. As described above, the communicating sections C provided in the electrodes or the agitation members 61 provided in the water flow channel are used in Example 3 as the agitation unit. Electrolysis efficiency increases significantly in a case where either one of the communicating sections C and the agitation members 61 is used. In Example 4, the Reynolds number is 3500, and the flow of water is turbulent. In Example 4, electrolysis efficiency is further increased with respect to that of Example 3.

The flow of water in the water flow channel is laminar in a case where the circulation mechanism 80 is not provided, as in the reference example (Reynolds number of 160). It is deemed that, therefore, the amount of water that passes through the communicating sections C is unlikely to be large, and, accordingly, water passes through the vicinity of the agitation members 61 in a state of not being sufficiently disturbed.

In Example 3, by contrast, the circulation mechanism 80 renders the circulation flow rate Gc larger than the main stream flow rate Gw. It is deemed that that, therefore, the amount of water that passes through the communicating sections C is greater than that in the reference example, and that water passing through the agitation members 61 is disturbed more significantly than in the reference example.

In the third embodiment and variations thereof, as explained above, electrolysis efficiency can be increased, while curtailing increases in cost derived from the electrodes, in a temperature-adjusting water-supplying apparatus 11 that is provided with the electrolysis device 41.

While circulating by virtue of the circulation mechanism 80, water is continuously agitated in the water flow channel inside the container 47, and hence cathode-side water and anode-side water in the water flow channel are sufficiently mixed with each other, even if the main stream flow rate Gw is low. Treated water (water having undergone an electrolysis treatment) of stable quality is obtained as a result as water circulates by virtue of the circulation mechanism 80.

In the above temperature-adjusting water-supplying apparatus 11, disturbing is significant, and the effect of enhancing electrolysis efficiency is more increased, as in the above-described working examples, in a case where the circulation flow rate Gc is five times or more the main stream flow rate Gw.

In the third embodiment and variations thereof, the agitation effect of water inside the container 47 can be enhanced to a greater degree in an instance where at least one from among the first end 81a and the second end 81b is connected to the container 47 than in an instance where the first end 81a is connected to the downstream main pathway 27B and the second end 81 b is connected to the upstream main pathway 27A. That is because water inside the container 47 is disturbed more readily, in the vicinity of the first end 81a, by the inflow of water into the circulation path 81 via the first end 81a, while water inside the container 47 in the vicinity of the second end 81b is disturbed more readily, in the vicinity of the second end 81b, by the inflow of water into the container 47 via the second end 81b.

In the temperature-adjusting water-supplying apparatus 11, electrolysis efficiency is significantly enhanced thanks to the synergistic effect that combines the effect elicited by increasing the circulation flow rate Gc and the effect of the communicating sections C, as in the working examples described above, in a case where the communicating sections C that penetrate through the electrodes, in the thickness direction thereof, are provided in at least one of the electrodes of the electrode pairs 49.

In the temperature-adjusting water-supplying apparatus 11, electrolysis efficiency is significantly enhanced thanks to the synergistic effect that combines the effect elicited by increasing the circulation flow rate Gc and the effect of the recesses 65 and/or projections 66, in a case where at least one type from among the plurality of recesses 65 and the plurality of projections 66 is provided in at least one of the electrodes of the electrode pairs 49.

In the temperature-adjusting water-supplying apparatus 11, moreover, electrolysis efficiency is significantly enhanced thanks to the synergistic effect that combines the effect elicited by increasing the circulation flow rate Gc, and the effect of the agitation members 61, as in the working examples described above, in a case where the agitation members 61 that agitate water flowing through the water flow channel between the electrode pairs 49 is provided in the water flow channel.

### Other variations

The present invention is not limited to the above embodiments, and may accommodate various modifications and improvements within the scope of the claims.

In the embodiments, the direction of the meandering flow channel that is formed inside the container 47 may be the vertical direction or the horizontal direction. In a meandering flow channel that meanders in the horizontal direction, a cross-section of the electrolysis device 41 illustrated in Fig. 2, when cut in a cross-section along a plane parallel to the horizontal direction, adopts a shape such as the one of Fig. 3A, and a cross-section of the electrolysis device 41 illustrated in Fig. 2, when cut along a cross-section along a plane parallel to the vertical direction, adopts a shape such as the one illustrated in Fig. 3B.

The embodiments have been explained based on examples of instances where, in the flow channel of water in the heat pump hot-water supply apparatus 11, the electrolysis device 41 is provided in the water inlet pipe 27 that is positioned upstream of the water heat exchanger 21, and downstream of the pump 31, but the embodiments are not limited thereto. It suffices that the electrolysis device 41 be provided upstream of the water heat exchanger 21, in the flow channel of water. Specifically, the electrolysis device 41 may be for instance provided in the water inlet pipe 27 upstream of the pump 31, or may be provided in the water supply pipe 37 through which water is supplied from the water supply source to the tank 15.

The embodiments have been explained based on examples of instances where the container 47 is of substantially rectangular parallelepiped shape, but the embodiments are not limited thereto. The container 47 may be of prismatic shape, other than a rectangular parallelepiped, or may be of columnar shape.

The embodiments have been explained based on example of a once-through water heater, but the embodiments are not limited thereto. The present invention can also be used in a water heater of a type such that part of the water (hot water) that is supplied through the hot water supply pipe 35 is returned again to the tank 15.

In the first embodiment, an instance has been illustrated wherein the plurality of communicating sections C is provided in the electrode plate, but it suffices that at least one communicating section C be provided in the electrode plate.

In the embodiments, an instance has been illustrated in which the temperature-adjusting water-supplying apparatus is the heat pump hot-water supply apparatus 11, but the embodiments are not limited thereto. Applications of the temperature-adjusting water-supplying apparatus may include a case where a scale component must be removed, for example, a heat pump hot-water heater, a combustion-type hot-water supply apparatus, an electric water warmer, a cooling tower or the like.

In the heat pump hot-water heater, high-temperature water stored in the tank 15 can be used for heating or the like, for instance in the configuration diagram illustrated in Fig. 1.

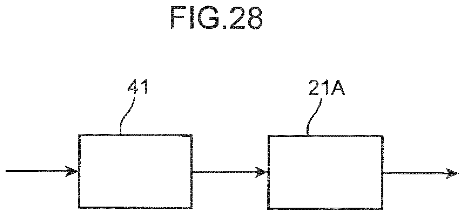

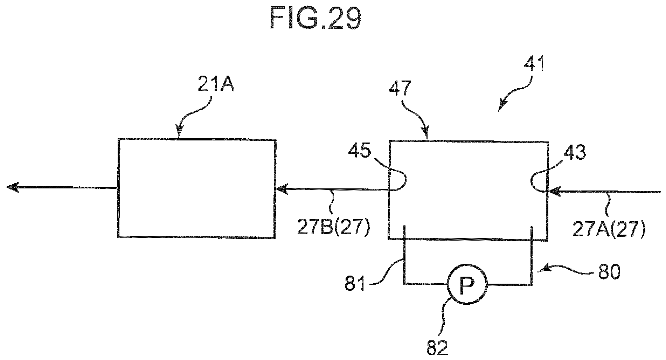

The above combustion-type hot-water supply apparatus comprises the electrolysis device 41, and a water heat exchanger 21A provided downstream of the electrolysis device 41, as illustrated in Figs. 28, 29. In the combustion-type hot-water supply apparatus, water is heated, in the water heat exchanger 21A, using thermal energy obtained through burning of, for instance, a gas for fuel.

The electric water warmer is provided with the electrolysis device 41, and the water heat exchanger 21A provided downstream of the electrolysis device 41, as illustrated in Figs. 28, 29. In the electric water warmer, water is heated, in the water heat exchanger 21A, using electric energy.

The cooling tower comprises, for instance, with the electrolysis device 41, and the water heat exchanger 21A provided downstream of the electrolysis device 41, as illustrated in Figs. 28, 29. In the cooling tower, water is heated, at the water heat exchanger 21A, through exchange of heat with a conveyed fluid that carries heat generated in another device.

In Fig. 29, the circulation path 81 of the circulation mechanism 80 is connected to the container 47, but the circulation path 81 is not limited thereto, and may be connected to various connection sites as illustrated in the above variations.

### Overview of the embodiments

An overview of the embodiments described above follows next.
(1) The electrolysis device according to the first to third embodiments removes a scale component contained in water that is fed to a water heat exchanger. The electrolysis device comprises a container having a water inlet port and a water outlet port; a plurality of electrodes provided inside the container; and agitation means for agitating water that flows between adjacent electrodes, between the water inlet port and the water outlet port.
   In this configuration, water flowing between the electrodes is agitated by the agitation means. It becomes possible as a result to suppress drifting of water of low scale component concentration towards the vicinity of those electrodes that function as anodes, and hence the precipitation reaction of the scale component between the electrodes is accordingly promoted. Therefore, the removal efficiency of scale component in the water can be enhanced even without increasing the surface area of the electrodes by resorting to a means such as increasing the number of electrodes or increasing the size of the electrodes. Therefore, it becomes possible to increase the removal efficiency of scale component while curtailing increases in cost derived from electrode materials.
(2) In the electrolysis device, the agitation means may include a component that is separate from the electrodes, or may be formed in the electrodes themselves. Specific examples of the former case include, for instance, the first embodiment and the third embodiment. Specific examples of the latter case include, for instance, the second embodiment.
(3) In the former case, the component may include a circulation mechanism that causes water inside the container, or water flowed out through the water outlet port of the container, to return upstream, such that a circulation flow rate of water returning upstream is greater than a main stream flow rate of water fed to the water heat exchanger.
   In this configuration, electrolysis efficiency in the electrolysis device can be enhanced while suppressing cost increases derived from the electrodes. The reason for this is as follows.
   Upon electrolysis in the water flow channel in the electrode pairs, scale precipitates at cathode-side regions, and hence the concentration of scale component decreases. Therefore, the scale component concentration at cathode-side regions is lower than the scale component concentration at anode-side regions. As a result, precipitation of scale is slowed down, and the removal efficiency of scale component (electrolysis efficiency) decreases.
   In the temperature-adjusting water-supplying apparatus such as the heat pump hot-water supply apparatus, the amount of water that is heated in a water heat exchanger (amount of water fed to the water heat exchanger), and the amount of water that undergoes an electrolysis treatment in the electrolysis device, are ordinarily identical. Accordingly, the velocity of water flowing through the water flow channel between electrodes in conventional electrolysis devices is low, and the water flowing through the water flow channel exhibits laminar flow. The scale component concentration at the above-described cathode-side regions is therefore kept low, regardless of the presence of water of comparatively high scale component concentration at anode-side regions. Achieving sufficient electrolysis efficiency is thus difficult.
   In the present configuration, therefore, the flow velocity of water flowing through the water flow channel in the electrode pairs is enhanced by making the circulation flow rate greater than the main stream flow rate of water that is fed to the water heat exchanger. Thereby, water is agitated in the water flow channel, and there decreases the difference between the scale component concentration at cathode-side regions and the scale component concentration at anode-side regions. The scale component concentration at cathode-side regions becomes as a result higher than that before agitation, at the above circulation flow rate, and removal efficiency of scale component is therefore increased.
(4) In the electrolysis device, preferably, the circulation flow rate is five times or more the main stream flow rate. The effect of increasing flow disturbing is significant, and the effect of enhancing electrolysis efficiency is more increased, as in the below-described working examples, in a case where the circulation flow rate is five times or more the main stream flow rate, as in the present configuration.
(5) The electrolysis device may further comprise an upstream main pathway, connected to the water inlet port of the container, for supplying water to the container; and a downstream main pathway that is connected to the water outlet port of the container and that feeds, to the water heat exchanger, water that flows out of the water outlet port; wherein the circulation mechanism includes a circulation path and a circulation pump that causes water to flow through the circulation path; a first end of the circulation path may be connected to the container or the downstream main pathway; and a second end of the circulation path may be connected to a position, in the container, upstream of a connection site of the first end, or to the upstream main pathway.
   The agitation effect on water inside the container is enhanced to a greater degree in an instance where at least one from among the first end and the second end of the connection structure is connected to the container, than in an instance where the first end is connected to the downstream main pathway and the second end is connected to the upstream main pathway. That is because water inside the container is disturbed more readily, in the vicinity of the first end, by the inflow of water into the circulation path via the first end, while water inside the container in the vicinity of the second end is disturbed more readily, in the vicinity of the second end, by the inflow of water into the container via the second end.
(6) The component may include a plurality of agitation members that are arrayed along a direction of water flow, between the adjacent electrodes. In this configuration, the removal efficiency of scale component can be enhanced by just resorting to a simple structure, namely an array of a plurality of agitation members along the direction of water flow.
(7) In the electrolysis device, preferably, each of the agitation members is formed of an insulating material. In this configuration, the agitation members are formed of an insulating material, and hence the configuration is advantageous in terms of not being prone to corrosion, even when undergoing a prolonged electrolysis treatment in a state where the agitation members are disposed between the adjacent electrodes.
(8) In the electrolysis device, each of the agitation members may extend in a direction that intersects the direction of water flow, in a state where gaps are formed between the electrodes and each of the agitation members. In this configuration, the agitation members extend, between the adjacent electrodes, in a direction that intersects the direction of water flow. Therefore, the water flowing between the electrodes can be agitated effectively. Moreover, the agitation members are disposed in a state where gaps are provided between the adjacent electrodes, and hence water can be agitated with good efficiency. By providing a gap between the agitation members and the electrodes, a pathway is created wherein the flow of water that flows between the electrodes is split at the agitation members, and the resulting flow paths merge again after having passed the agitation members. Water can be agitated as a result with good efficiency.
(9) In the electrolysis device, the component may include a stirrer that has a stirring blade disposed inside the container, and a motor that is connected to the stirring blade.
   In this configuration, the water inside the container is forcibly agitated by the stirring blades, and hence the effect of enhancing the removal efficiency of scale component is increased.
(10) Specific examples of the latter case include the following forms. Specifically, the plurality of electrodes have a first electrode plate, a second electrode plate and a third electrode plate, each of which has a plate-shape, the first electrode plate, the second electrode plate and the third electrode plate are arrayed in this order, spaced apart from one another, in a plate thickness direction; a gap between the first electrode plate and the second electrode plate functions as a first flow channel through which water flows; a gap between the second electrode plate and the third electrode plate functions as a second flow channel through which water flows; and the agitation means includes an inflow section provided in the second electrode plate, part of water flowing through the first flow channel flows into the second flow channel via the inflow section.
   In this configuration, part of water flowing through the first flow channel flows into the second flow channel via the inflow section, and hence the inflowing water is mixed with water flowing through the second flow. The flow of water through which the second flow channel is disturbed through mixing of water this way. Accordingly, it becomes possible to effectively suppress drifting of water of low scale component concentration towards the vicinity of the electrode plate that functions as an anode, from among the second electrode plate and third electrode plate that make up the second flow channel. Therefore, the precipitation reaction of the scale component between the second electrode plate and the third electrode plate is accordingly promoted.
   The flow of water flowing through the vicinity of the inflow section in the first flow channel is disturbed when, as explained in the above section, part of the water that flows through the first flow channel flows out of the first flow channel via the inflow section. As a result, it becomes possible to effectively suppress drifting of water of low scale component concentration towards the vicinity of the electrode plate that functions as an anode, from among the first electrode plate and the second electrode plate that fonn the first flow channel, and hence the precipitation reaction of the scale component between the first electrode plate and the second electrode plate is accordingly promoted.
   As described above, this configuration allows increasing the removal efficiency of scale component in water, even without increasing the surface area of the electrode plates by increasing the number of electrode plates. Therefore, it becomes possible to increase the removal efficiency of scale component while curtailing increases in cost derived from electrode materials.
(11) In the electrolysis device, preferably, the inflow section includes a plurality of through-holes provided in the second electrode plate. In this configuration, part of water flowing through the first flow channel flows into the second flow channel via the plurality of through-holes, and hence the effect of agitation of water flowing through the second flow channel can be further enhanced.
(12) In the electrolysis device, the inflow section may include a communicating section provided on an edge of the second electrode plate.
   In this configuration, water flows from the first flow channel into the second flow channel via the communicating section that is provided at the edge of the second electrode plate. Such water inflow disturbs the flow of water at the turn-back section that is adjacent to the edge of the second electrode plate, and the flow of water from the turn-back section into the second flow channel. Therefore, the water that flows from the turn-back section into the second flow channel exhibits a smaller difference between the scale component concentration at a region on the side of the second electrode plate 52 and the scale component concentration at a region on the side of the third electrode plate 53. As a result, it becomes possible to further suppress drifting of water of low scale component concentration towards the second electrode plate and the third electrode plate in the second flow channel.
(13) In the electrolysis device, at least one electrode plate from among the first electrode plate, the second electrode plate and the third electrode plate, may have at least either a plurality of projections that protrude towards an adjacent electrode plate or a plurality of recesses that are recessed towards a side opposite to an adjacent electrode plate.
   In this configuration, the flow of water in the flow channel between adjacent electrode plates is disturbed by at least one type of the plurality of projections and the plurality of recesses. As a result, it becomes possible to further suppress drifting of water of low scale component concentration towards the vicinity of those electrodes that function as anodes, from among the adjacent electrode plates. Therefore, the precipitation reaction of scale component between electrode plates is further promoted.
(14) In the electrolysis device, preferably, the plurality of electrodes form a meandering flow channel through which water flows while meandering inside the container.
   In this configuration, water that has flowed into the container through the water inlet port flows along a meandering pathway, from the upstream side towards the downstream side, along the electrodes. Therefore, the contact surface area between the electrodes and the water increases, and the removal efficiency of scale component can be further enhanced.
(15) A temperature-adjusting water-supplying apparatus of the present invention comprises a water heat exchanger that heats water; and the above electrolysis device; wherein the temperature-adjusting water-supplying apparatus supplies water, the temperature of which has been adjusted in the water heat exchanger. In this configuration, the temperature-adjusting water-supplying apparatus comprises an electrolysis device such as the above one, and hence the electrolysis device allows suppressing precipitation of scale in the water heat exchanger while curtailing increases in cost derived from electrode materials.

11 heat pump hot-water supply apparatus
21 water heat exchanger
41 electrolysis device
43 water inlet port
45 water outlet port
47 container
49 electrode pair
51 electrode
52 electrode
60 agitation unit
80 circulation mechanism
81 circulation path
82 circulation pump
C communicating section

## Claims

1. A heat-pump hot water supply apparatus (11) comprising:
a water heat exchanger (21) for heating water;
a tank (15) for storing water;
a water inlet pipe (27) having a feed-side flow channel through which water from the tank (15) is fed to the water heat exchanger (21);
a pump (31) for feeding water being provided in the water inlet pipe (27);
a hot water outlet pipe (29) having a return-side flow channel through which water heated in the water heat exchanger (21) through exchange of heat, is returned to the tank (15);
a heat pump unit (13) with a refrigerant circuit (10a) and a hot water storage circuit (10b);
the refrigerant circuit (10a) formed by a compressor (19), a motor-operated expansion valve (23), an air heat exchanger (25), the water heat exchanger (21) and a refrigerant pipe connecting the foregoing;
the hot water storage circuit (10b) formed by the tank (15), the pump (31), the water heat exchanger (21), an electrolysis device (41) and the water inlet and outlet pipes (27, 29) connecting the foregoing;
a hot water supply pipe (35) for retrieving water stored inside the tank (15) and connected to an upper part of the tank (15);
a water supply pipe (37) supplying water from a water source into the tank (15) and connected to the bottom of the tank (15);
the electrolysis device (41) which is provided in the feed-side flow channel in the water inlet pipe (27) at a position downstream of the pump (31) and upstream of the water heat exchanger (21), or which is provided in the water inlet pipe (27) at a position upstream of the pump (31) and upstream of the water heat exchanger (21), and which is for removing a scale component contained in water that is fed to the water heat exchanger (21), and
a controller (32) that controls the electrolysis device (41),
the electrolysis device (41) comprising:
a container (47) having a water inlet port (43) and a water outlet port (45);
a plurality of first electrodes (51) and second electrodes (52) provided inside the container (47)and connected to a power source;
agitation means (60) for agitating water that flows between adjacent electrodes (51, 52), between the water inlet port (43) and the water outlet port (45);
an upstream main pathway that is connected to the water inlet port (43) of the container (47) and that supplies water to the container (47); and
a downstream main pathway that is connected to the water outlet port (45) of the container (47) and that feeds, to the water heat exchanger (21), water that flows out of the water outlet port (45), wherein
the agitation means (60) includes a component that is separate from the electrodes (51, 52),
the component includes a circulation mechanism (80) for causing water inside the container (47) to return upstream,
the circulation mechanism (80) comprising:
a circulation path (81) having a first end (81a) and a second end (81b) and
a circulation pump (82) provided at the circulation path (81) which is configured to cause water to flow through the circulation path (81),
the first end (81a) is connected to the wall section of the container (47) that delimits the space (S1) which is provided between the electrode furthest downstream and the wall section that opposes this electrode,
the second end (81b) is connected to the wall section that delimits the space (S2) which is provided between the electrode furthest upstream and the wall section that opposes this electrode.

2. The heat-pump hot water supply apparatus according to claim 1, wherein the component includes a plurality of agitation members (61) that are arrayed along a direction of water flow, between the adjacent electrodes (51, 52).

3. The heat-pump hot water supply apparatus according to claim 2, wherein each of the agitation members (61) is formed of an insulating material.

4. The heat-pump hot water supply apparatus according to claim 2 or 3, wherein each of the agitation members (61) extends in a direction that intersects the direction of water flow, in a state where gaps (G) are formed between the electrodes (51, 52) and each of the agitation members (61).

5. The heat-pump hot water supply apparatus according to any one of claims 1 to 4, wherein the component includes a stirrer (64) that has a stirring blade (62) disposed inside the container (47), and a motor (63) that is connected to the stirring blade (62).

6. The heat-pump hot water supply apparatus according to any one of claims 1 to 5, wherein
the plurality of electrodes (51, 52) include a first electrode plate (51), a second electrode plate (52) and a third electrode plate (53), each of which has a plate shape,
the first electrode plate (51), the second electrode plate (52) and the third electrode plate (53) are arrayed in this order, spaced apart from one another, in a plate thickness direction;
a gap between the first electrode plate (51) and the second electrode plate (52) functions as a first flow channel (F1) through which water flows;
a gap between the second electrode plate (52) and the third electrode plate (53) functions as a second flow channel (F2) through which water flows; and
the agitation means (60) includes an inflow section provided in the second electrode plate (52),
part of water flowing through the first flow channel (F1) flows into the second flow channel (F2) via the inflow section.

7. The heat-pump hot water supply apparatus according to claim 6, wherein the inflow section includes a plurality of through-holes provided in the second electrode plate (52).

8. The heat-pump hot water supply apparatus according to claim 6 or 7, wherein the inflow section includes a communicating section provided on an edge of the second electrode plate (52).

9. The heat-pump hot water supply apparatus according to any one of claims 6 to 8, wherein at least one electrode plate from among the first electrode plate (51), the second electrode plate (52) and the third electrode plate (53) has at least either a plurality of projections (66) that protrude towards an adjacent electrode plate or a plurality of recesses (65) that are recessed towards a side opposite to an adjacent electrode plate.

10. The heat-pump hot water supply apparatus according to any one of claims 1 to 9, wherein the plurality of electrodes (51, 52) form a meandering flow channel through which water flows while meandering inside the container (47).

## Patentansprüche

1. Wärmepumpen-Heißwasserversorgungsausrüstung (11), die Folgendes beinhaltet:
einen Wasserwärmetauscher (21) zum Erwärmen von Wasser;
einen Tank (15) zum Speichern von Wasser;
eine Wassereinlassleitung (27), die einen Speiseseitigen Strömungskanal aufweist, durch den Wasser vom Tank (15) zum Wasserwärmetauscher (21) gespeist wird;
eine Pumpe (31) zum Speisen von Wasser, das in der Wassereinlassleitung (27) bereitgestellt ist;
eine Heißwasserauslassleitung (29), die einen Rückleitungsseitenströmungskanal aufweist, durch den Wasser, das im Wasserwärmetauscher (21) durch Tausch von Wärme erwärmt wird, zum Tank (15) zurückgeleitet wird;
eine Wärmepumpeneinheit (13) mit einem Kühlmittelkreis (10a) und einem Heißwasserspeicherkreis (10b);
wobei der Kühlmittelkreis (10a) durch einen Verdichter (19), ein motorbetriebenes Expansionsventil (23), einen Luftwärmetauscher (25), den Wasserwärmetauscher (21) und eine Kühlmittelleitung, die die Vorhergehenden verbindet, gebildet wird;
wobei der Heißwasserspeicherkreis (10b) durch den Tank (15), die Pumpe (31), den Wasserwärmetauscher (21), eine Elektrolysevorrichtung (41) und die Wassereinlassleitung und Wasserauslassleitung (27, 29), die die Vorhergehenden verbinden, gebildet wird;
eine Heißwasserversorgungsleitung (35) zum Entnehmen von Wasser, das im Tank (15) gespeichert ist, und die mit einem oberen Teil des Tanks (15) verbunden ist;
eine Wasserversorgungsleitung (37), die den Tank (15) mit Wasser von einer Wasserquelle versorgt und mit der Unterseite des Tanks (15) verbunden ist;
wobei die Elektrolysevorrichtung (41) im Speiseseitigen Strömungskanal in der Wassereinlassleitung (27) an einer Position stromabwärts von der Pumpe (31) und stromaufwärts vom Wasserwärmetauscher (21) bereitgestellt ist oder in der Wassereinlassleitung (27) an einer Position stromaufwärts von der Pumpe (31) und stromaufwärts vom Wasserwärmetauscher (21) bereitgestellt ist und zum Entfernen einer Kesselsteinkomponente dient, die im Wasser enthalten ist, das zum Wasserwärmetauscher (21) gespeist wird, und
eine Steuereinheit (32), die die Elektrolysevorrichtung (41) steuert,
wobei die Elektrolysevorrichtung (41) Folgendes beinhaltet:
einen Behälter (47), der eine Wassereinlassöffnung (43) und eine Wasserauslassöffnung (45) aufweist;
eine Vielzahl von ersten Elektroden (51) und zweiten Elektroden (52), die im Behälter (47) bereitgestellt sind und mit einer Stromquelle verbunden sind;
ein Bewegungsmittel (60) zum Bewegen von Wasser, das zwischen benachbarten Elektroden (51, 52), zwischen der Wassereinlassöffnung (43) und der Wasserauslassöffnung (45) strömt;
einen stromaufwärtigen Hauptpfad, der mit der Wassereinlassöffnung (43) des Behälters (47) verbunden ist und der den Behälter mit Wasser (47) versorgt; und
einen stromabwärtigen Hauptpfad, der mit der Wasserauslassöffnung (45) des Behälters (47) verbunden ist und der Wasser, das aus der Wasserauslassöffnung (45) herausströmt, zum Wasserwärmetauscher (21) speist, wobei
das Bewegungsmittel (60) eine Komponente umfasst, die von den Elektroden (51, 52) getrennt ist,
wobei die Komponente einen Zirkulationsmechanismus (80) umfasst, um zu bewirken, das Wasser im Behälter (47) stromaufwärts zurückkehrt,
wobei der Zirkulationsmechanismus (80) Folgendes beinhaltet:
einen Zirkulationspfad (81), der ein erstes Ende (81a) und ein zweites Ende (81b) aufweist,
und
eine Zirkulationspumpe (82), die am Zirkulationspfad (81) bereitgestellt ist, die konfiguriert ist, zu bewirken, dass Wasser durch den Zirkulationspfad (81) strömt,
wobei das erste Ende (81a) mit einem Wandabschnitt des Behälters (47) verbunden ist, der den Raum (S1) begrenzt, der zwischen der am weitesten stromabwärts liegenden Elektrode und dem Wandabschnitt, der dieser Elektrode gegenüberliegt, bereitgestellt ist,
wobei das zweite Ende (81b) mit einem Wandabschnitt verbunden ist, der den Raum (S2) begrenzt, der zwischen der am weitesten stromaufwärts liegenden Elektrode und dem Wandabschnitt, der dieser Elektrode gegenüberliegt, bereitgestellt ist.

2. Wärmepumpen-Heißwasserversorgungsausrüstung gemäß Anspruch 1, wobei die Komponente eine Vielzahl von Bewegungsmitteln (61) umfasst, die entlang einer Richtung der Wasserströmung, zwischen den benachbarten Elektroden (51, 52) angeordnet sind.

3. Wärmepumpen-Heißwasserversorgungsausrüstung gemäß Anspruch 2, wobei jedes der Bewegungsmittel (61) aus einem isolierenden Material gebildet ist.

4. Wärmepumpen-Heißwasserversorgungsausrüstung gemäß Anspruch 2 oder 3, wobei sich jedes der Bewegungsmittel (61) in eine Richtung erstreckt, die in einem Zustand, in dem Spalten (G) zwischen den Elektroden (51, 52) und jedem der Bewegungsmittel (61) gebildet sind, die Richtung der Wasserströmung schneidet.

5. Wärmepumpen-Heißwasserversorgungsausrüstung gemäß einem der Ansprüche 1 bis 4, wobei die Komponente einen Rührer (64), der ein Rührblatt (62) aufweist, das sich im Behälter (47) befindet, und einen Motor (63), der mit dem Rührblatt (62) verbunden ist, umfasst.

6. Wärmepumpen-Heißwasserversorgungsausrüstung gemäß einem der Ansprüche 1 bis 5, wobei
die Vielzahl von Elektroden (51, 52) eine erste Elektrodenplatte (51), eine zweite Elektrodenplatte (52) und eine dritte Elektrodenplatte (53) umfasst, die jeweils eine Plattenform aufweisen,
wobei die erste Elektrodenplatte (51), die zweite Elektrodenplatte (52) und die dritte Elektrodenplatte (53) in dieser Reihenfolge, voneinander beabstandet, in einer Plattendickenrichtung angeordnet sind;
wobei ein Spalt zwischen der ersten Elektrodenplatte (51) und der zweiten Elektrodenplatte (52) als erster Strömungskanal (F1) fungiert, durch den Wasser strömt;
wobei ein Spalt zwischen der zweiten Elektrodenplatte (52) und der dritten Elektrodenplatte (53) als zweiter Strömungskanal (F2) fungiert, durch den Wasser strömt; und
wobei das Bewegungsmittel (60) einen Einströmabschnitt umfasst, der in der zweiten Elektrodenplatte (52) bereitgestellt ist,
wobei Teil des Wassers, das durch den ersten Strömungskanal (F1) strömt, über den Einströmabschnitt in den zweiten Strömungskanal (F2) strömt.

7. Wärmepumpen-Heißwasserversorgungsausrüstung gemäß Anspruch 6, wobei der Einströmabschnitt eine Vielzahl von Durchgangslöchern umfasst, die in der zweiten Elektrodenplatte (52) bereitgestellt sind.

8. Wärmepumpen-Heißwasserversorgungsausrüstung gemäß Anspruch 6 oder 7, wobei der Einströmabschnitt einen Kommunikationsabschnitt umfasst, der an einem Rand der zweiten Elektrodenplatte (52) bereitgestellt ist.

9. Wärmepumpen-Heißwasserversorgungsausrüstung gemäß einem der Ansprüche 6 bis 8, wobei mindestens eine Elektrodenplatte von der ersten Elektrodenplatte (51), der zweiten Elektrodenplatte (52) und der dritten Elektrodenplatte (53) mindestens entweder eine Vielzahl von Vorsprüngen (66), die in Richtung einer benachbarten Elektrodenplatte vorstehen, oder eine Vielzahl von Vertiefungen (65), die in Richtung einer Seite gegenüber einer benachbarten Elektrodenplatte vertieft sind, aufweist.

10. Wärmepumpen-Heißwasserversorgungsausrüstung gemäß einem der Ansprüche 1 bis 9, wobei die Vielzahl von Elektroden (51, 52) einen mäandrierenden Strömungskanal bilden, durch den Wasser strömt, während es im Behälter (47) mäandriert

## Revendications

1. Appareil de distribution d'eau chaude (11) à pompe à chaleur comportant:
un échangeur de chaleur à eau (21) servant à chauffer l'eau;
un réservoir (15) servant à stocker l'eau;
une tuyauterie d'arrivée de l'eau (27) ayant une voie de débit côté alimentation à travers laquelle l'eau du réservoir (15) est menée à l'échangeur de chaleur à eau (21);
une pompe (31) servant à alimenter l'eau prévue dans la tuyauterie d'arrivée de l'eau (27);
une tuyauterie de sortie de l'eau chaude (29) ayant une voie de débit côté retour à travers laquelle l'eau chauffée dans l'échangeur de chaleur (21), par échange de chaleur, est renvoyée au réservoir (15);
une pompe à chaleur (13) ayant un circuit de réfrigérant (10a) et un circuit de stockage de l'eau chaude (10b);
le circuit de réfrigérant (10a) qui comprend un compresseur (19), un détendeur (23) actionné par moteur, un échangeur de chaleur à air (25), l'échangeur de chaleur à eau (21), et une tuyauterie de réfrigérant qui raccorde toutes ces unités;
le circuit de stockage de l'eau chaude (10b) qui comprend le réservoir (15), la pompe (31), l'échangeur de chaleur à eau (21), un dispositif d'électrolyse (41), et les tuyauteries d'arrivée et de sortie de l'eau (27, 29) qui raccordent toutes ces unités;
une tuyauterie d'alimentation d'eau chaude (35) servant à récupérer l'eau stockée à l'intérieur du réservoir (15) et raccordée à une partie supérieure du réservoir (15);
une tuyauterie d'alimentation d'eau (37) servant à envoyer, dans le réservoir (15), l'eau qui provient d'une source d'eau, et qui est raccordée à la partie inférieure du réservoir (15);
le dispositif d'électrolyse (41) qui est prévu dans la voie de débit côté alimentation de la tuyauterie d'arrivée de l'eau (27) en aval de la pompe (31) et en amont de l'échangeur de chaleur à eau (21), ou bien qui est prévu dans la tuyauterie d'arrivée de l'eau (27) en amont de la pompe (31) et en amont de l'échangeur de chaleur à eau (21), et qui sert à enlever un composant d'entartrage qui se trouve dans l'eau menée à l'échangeur de chaleur à eau (21), et
un appareil de contrôle (32) qui contrôle le dispositif d'électrolyse (41),
le dispositif d'électrolyse (41) comportant:
un conteneur (47) ayant un orifice d'arrivée de l'eau (43) et un orifice de sortie de l'eau (45);
une pluralité de premières électrodes (51) et de deuxièmes électrodes (52) prévues à l'intérieur du conteneur (47) et raccordées à une source d'énergie électrique;
un moyen d'agitation (60) servant à agiter l'eau qui circule entre des électrodes adjacentes (51, 52), entre l'orifice d'arrivée de l'eau (43) et l'orifice de sortie de l'eau (45);
un chemin principal en amont qui est raccordé à l'orifice d'arrivée de l'eau (43) du conteneur (47) et qui alimente l'eau au conteneur (47); et
un chemin principal en aval qui est raccordé à l'orifice de sortie de l'eau (45) du conteneur (47) et qui alimente, à l'échangeur de chaleur à eau (21), l'eau qui sort de l'orifice de sortie de l'eau (45), où
le moyen d'agitation (60) comprend un composant qui est séparé des électrodes (51, 52),
le composant d'entartrage comprend un mécanisme de circulation (80) qui renvoie en amont l'eau qui se trouve à l'intérieur du conteneur (47),
le mécanisme de circulation (80) comprend:
une voie de circulation (81) dotée d'une première extrémité (81a) et d'une deuxième extrémité (81b) et
une pompe de circulation (82) prévue dans la voie de circulation (81) et configurée de manière à faire circuler l'eau à travers la voie de circulation (81),
la première extrémité (81a) est raccordée à la section pariétale du conteneur (47) qui délimite l'espace (S1) prévu entre l'électrode qui se trouve le plus en aval et la section pariétale de la paroi en face de cette électrode,
la deuxième extrémité (81b) est raccordée à la section pariétale qui délimite l'espace (S2) prévu entre l'électrode qui se trouve le plus en amont et la section pariétale de la paroi en face de cette électrode.

2. Appareil de distribution d'eau chaude à pompe à chaleur selon la revendication 1, où le composant d'entartrage comprend une pluralité d'éléments d'agitation (61) qui sont disposés dans le sens de la circulation de l'eau, entre les électrodes adjacentes (51, 52).

3. Appareil de distribution d'eau chaude à pompe à chaleur selon la revendication 2, où chacun des éléments d'agitation (61) est réalisé en un matériau isolant.

4. Appareil de distribution d'eau chaude à pompe à chaleur selon la revendication 2 ou 3, où chacun des éléments d'agitation (61) s'étend dans un sens qui coupe le sens de la circulation de l'eau, dans un état où il se forme des intervalles (G) entre les électrodes (51, 52) et chacun des éléments d'agitation (61).

5. Appareil de distribution d'eau chaude à pompe à chaleur selon l'une quelconque des revendications 1 à 4, où le composant d'entartrage comprend un agitateur (64) comportant une lame d'agitation (62) qui est disposée à l'intérieur du conteneur (47), ainsi qu'un moteur (63) qui est raccordé à la lame d'agitation (62).

6. Appareil de distribution d'eau chaude à pompe à chaleur selon l'une quelconque des revendications 1 à 5, où
la pluralité d'électrodes (51, 52) comprend une première plaque-électrode (51), une deuxième plaque-électrode (52), et une troisième plaque-électrode (53), qui sont toutes en forme de plaque,
la première plaque-électrode (51), la deuxième plaque-électrode (52), et la troisième plaque-électrode (53) sont disposées dans cet ordre, et écartées l'une de l'autre dans le sens de l'épaisseur des plaques;
un intervalle entre la première plaque-électrode (51) et la deuxième plaque-électrode (52) fait fonction de premier canal d'écoulement (F1) à travers lequel circule l'eau;
un intervalle entre la deuxième plaque-électrode (52) et la troisième plaque-électrode (53) fait fonction de deuxième canal d'écoulement (F2) à travers lequel circule l'eau; et
le moyen d'agitation (60) comprend une section d'arrivée prévue dans la deuxième plaque-électrode (52),
une partie de l'eau qui circule à travers la première plaque-électrode (F1) circule également à travers le deuxième canal d'écoulement (F2) par l'intermédiaire de la section d'arrivée.

7. Appareil de distribution d'eau chaude à pompe à chaleur selon la revendication 6, où la section d'arrivée comprend une pluralité de trous traversants prévus dans la deuxième plaque-électrode (52).

8. Appareil de distribution d'eau chaude à pompe à chaleur selon la revendication 6 ou 7, où la section d'arrivée comprend une section communicante prévue sur l'un des bords de la deuxième plaque-électrode (52).

9. Appareil de distribution d'eau chaude à pompe à chaleur selon l'une quelconque des revendications 6 à 8, où au moins une plaque-électrode qui est soit la première plaque-électrode (51), soit la deuxième plaque-électrode (52), soit encore la troisième plaque-électrode (53) comporte au moins soit une pluralité de protubérances (66) qui font saillie vers une plaque-électrode voisine, soit une pluralité de protubérances (65) qui sont encastrées en direction d'un côté faisant face à une plaque-électrode adjacente.

10. Appareil de distribution d'eau chaude à pompe à chaleur selon l'une quelconque des revendications 1 à 9, où la pluralité des électrodes (51, 52) forme une voie de circulation à méandres à travers laquelle s'écoule l'eau en serpentant à l'intérieur du conteneur (47).
